# EUROPEAN PATENT APPLICATION

(11) **EP 4 738 417 A1**
(43) Date of publication of application: **06.05.2026**
(21) Application number: 25212360.9
(22) Date of filing: 30.10.2025
(51) Int. Cl.: H01H 39/00

(54) **INTERRUPTER, POWER DISTRIBUTION DEVICE, AND VEHICLE**

(30) Priority: 31.10.2024 CN 202411550797
(71) Applicant: Huawei Digital Power Technologies Co., Ltd., Shenzhen, Guangdong 518043 (CN)
(72) Inventor: ZHOU, Xudong, Shenzhen, 518043 (CN); RAN, Xiaoke, Shenzhen, 518043 (CN); GONG, Yawen, Shenzhen, 518043 (CN); ZHAO, Fugao, Shenzhen, 518043 (CN); ZHANG, Xiufeng, Shenzhen, 518043 (CN); CHEN, Taixian, Shenzhen, 518043 (CN); LIU, Yanbo, Shenzhen, 518043 (CN); HUANG, Jiajun, Shenzhen, 518043 (CN)
(74) Representative: Gill Jennings & Every LLP

(57) **Abstract**

An interrupter, a power distribution device, and a vehicle are provided, and relate to the field of interrupter technologies. The interrupter includes: a base having an arc chute; a sealing cover, disposed on one side of an opening of the arc chute, where the sealing cover has a first channel that passes through a thickness direction of the sealing cover, and the first channel communicates with the opening of the arc chute; a current-carrying copper busbar, where the current-carrying copper busbar is disposed in parallel with the sealing cover, the current-carrying copper busbar passes through the sealing cover in a direction perpendicular to the thickness direction of the sealing cover, a sealed structure in which a boss and a clamping slot are matched is formed between the sealing cover and the current-carrying copper busbar, a part that is of the current-carrying copper busbar and that is located in the first channel includes a thinned part, and a thickness of the thinned part is less than a thickness of another part of the current-carrying copper busbar; and a piston, where the piston is at least partially accommodated in the first channel, and a projection of the piston in the thickness direction of the sealing cover at least partially overlaps with the thinned part. In the interrupter provided in this application, the sealed structure in which the boss and the clamping slot are matched is formed between the sealing cover and the current-carrying copper busbar, so that gas tightness of the interrupter can be improved.

## Description

### TECHNICAL FIELD

This application relates to the field of interrupter technologies, and in particular, to an interrupter, a power distribution device, and a vehicle.

### BACKGROUND

An interrupter is an electronic element configured to connect or disconnect a current in one or more circuits. The interrupter can be used in a power system, to protect safe operation of the power system. When the circuit is overloaded or short-circuited or has another fault, the interrupter can automatically switch to a disconnected state to disconnect the current in the circuit, thereby playing a protection role. A piston is disposed in the interrupter. When the current is abnormal, a high-speed movement of the piston is triggered, so that the piston breaks a current-carrying copper busbar to disconnect the circuit. After the current-carrying copper busbar is fractured, an arc and a high-temperature free gas are generated at a fracture part.

When the piston breaks the current-carrying copper busbar and enters an arc chute, if gas tightness between the current-carrying copper busbar and the sealing cover is poor, a high-temperature free gas in the arc chute spreads to the current-carrying copper busbar, and free electrons and ions in the gas increase conductivity between current-carrying copper busbars obtained through fracture, thereby reducing insulation performance between the current-carrying copper busbars obtained through fracture. Consequently, voltage breakdown occurs between fracture openings of the current-carrying copper busbars, and finally, the interrupter is damaged or even the entire power system is faulty.

### SUMMARY

This application provides an interrupter, a power distribution device, and a vehicle, to improve gas tightness of the interrupter.

According to a first aspect, this application provides an interrupter, including: a base having an arc chute; a sealing cover, disposed on one side of an opening of the arc chute, where the sealing cover has a first channel that passes through a thickness direction of the sealing cover, and the first channel communicates with the opening of the arc chute; a current-carrying copper busbar, where the current-carrying copper busbar is disposed in parallel with the sealing cover, the current-carrying copper busbar passes through the sealing cover in a direction perpendicular to the thickness direction of the sealing cover, a sealed structure in which a boss and a clamping slot are matched is formed between the sealing cover and the current-carrying copper busbar, a part that is of the current-carrying copper busbar and that is located in the first channel includes a thinned part, and a thickness of the thinned part is less than a thickness of another part of the current-carrying copper busbar; and a piston, where the piston is at least partially accommodated in the first channel, and a projection of the piston in the thickness direction of the sealing cover at least partially overlaps with the thinned part.

The sealed structure in which the boss and the clamping slot are matched is formed between the sealing cover and the current-carrying copper busbar that are provided in this application. The boss may be located in the clamping slot, so that a first contact surface of the sealing cover can be hermetically fitted against a second contact surface of the current-carrying copper busbar. Through a hermetic connection between the boss and the clamping slot, better sealing between the current-carrying copper busbar and the sealing cover can be implemented. In this application, there is good gas tightness between the current-carrying copper busbar and the sealing cover, so that a high-temperature free gas in the arc chute can be prevented from spreading to the current-carrying copper busbar. Therefore, the interrupter can quickly disconnect a current, to protect safe operation of the power system.

In a possible implementation, the clamping slot is located on a side that is of the current-carrying copper busbar and that faces away from the base, and the boss is disposed on the sealing cover and extends into the clamping slot from the side that is of the current-carrying copper busbar and that faces away from the base. The current-carrying copper busbar includes a connecting part and a bendable part. A surface of the bendable part in a negative Z direction and a surface of the connecting part in the negative Z direction are located on a same plane. A part of the bendable part in the first channel is the thinned part, and the thickness of the thinned part is less than a thickness of the connecting part. Therefore, a clamping slot is formed between the thinned part and the connecting part. The clamping slot is located on a side of the thinned part in a positive Z direction, and the boss is located on the sealing cover and extends into the clamping slot in the negative Z direction. Through matching between the boss and the clamping slot, the sealing cover is fastened to the current-carrying copper busbar, and gas tightness is improved.

In a possible implementation, the boss includes a first through hole, the first through hole communicates with the first channel, and a projection of the first through hole in the thickness direction of the sealing cover at least partially overlaps with the thinned part. The piston is accommodated in the first channel, the current-carrying copper busbar is accommodated in the sealing cover, and the piston may pass through the boss through the first through hole, break the thinned part of the current-carrying copper busbar, and enter the arc chute.

In a possible implementation, an edge of the first through hole is fitted against an outer wall surface of the piston. After the piston breaks the current-carrying copper busbar and enters the arc chute, the piston blocks the first through hole, and the edge of the first through hole may be fitted against the outer wall surface of the piston. In this design, it can be ensured that good sealing is formed between the piston and the first through hole. When the current-carrying copper busbar is broken by the piston, the high-temperature free gas in the arc chute can be prevented from flowing in the positive Z direction, to improve insulation performance of the current-carrying copper busbar, and avoid voltage breakdown between current-carrying copper busbars obtained through fracture. In addition, the piston moves relative to the first through hole, to reduce friction between the piston and the edge of the first through hole.

In a possible implementation, the sealing cover includes a sealing upper cover and a sealing lower cover, the sealing upper cover, the sealing lower cover, and the base are connected in sequence, an accommodation groove is disposed between the sealing upper cover and the sealing lower cover, and the accommodation groove is configured to enclose the current-carrying copper busbar. The accommodation groove may be configured to accommodate a part of the current-carrying copper busbar. When the sealing upper cover and the sealing lower cover are closed, the current-carrying copper busbar is located between the sealing upper cover and the sealing lower cover, and the part of the current-carrying copper busbar is located in the accommodation groove. In this case, the sealing upper cover and the sealing lower cover can enclose the current-carrying copper busbar, and the current-carrying copper busbar is fastened in the sealing cover.

In a possible implementation, the sealing upper cover is provided with a first raised rib, and the sealing lower cover is provided with a first groove; and/or the sealing lower cover is provided with a first raised rib, and the sealing upper cover is provided with a first groove; and the first raised rib is inserted into the first groove, and the first raised rib is located on two sides of the current-carrying copper busbar. After the first raised rib is inserted into the first groove, the first raised rib is located in the first groove and is fitted against an inner wall of the first groove. The first raised rib may match the first groove, so that the sealing upper cover and the sealing lower cover can be connected together by being closed. The first raised rib is located on the two sides of the current-carrying copper busbar, both ends of the first raised rib are fitted against the current-carrying copper busbar, and the first raised rib may limit the current-carrying copper busbar, to prevent the current-carrying copper busbar from moving relative to the sealing cover.

In a possible implementation, the sealing upper cover is provided with the first through hole, the sealing lower cover is provided with a second through hole, the first through hole and the second through hole communicate to form a part of the first channel, and on one side or two sides of the current-carrying copper busbar in a width direction of the current-carrying copper busbar, there is a spacing between the current-carrying copper busbar and each of the edge of the first through hole and an edge of the second through hole. The first through hole may communicate with the second through hole, and the first through hole and the second through hole can form the part of the first channel. After breaking the current-carrying copper busbar, the piston passes through the first through hole and the second through hole in sequence, and then enters the arc chute. The first through hole, the spacing, and the second through hole communicate in sequence. After the current-carrying copper busbar is fractured, an arc is generated. The arc propagates along an edge of the spacing. A distance, between the current-carrying copper busbars obtained through fracture, along the edge of the spacing is a creepage distance. Through disposing of the spacing, arc discharge may be effectively avoided, to improve safety and reliability of the interrupter.

In a possible implementation, in an extension direction of the current-carrying copper busbar, a length of a projection overlapping part between the second through hole and the current-carrying copper busbar in the thickness direction of the sealing cover is greater than a length of a projection overlapping part between the first through hole and the current-carrying copper busbar in the thickness direction of the sealing cover. In this design, an opening area of the second through hole is greater than an opening area of the first through hole. The second through hole is located on a side of the first through hole in the negative Z direction, and the opening area of the second through hole is greater than the opening area of the first through hole. A larger opening area makes resistance small during normal flowing of a gas, but large airflow resistance needs to be overcome during backflowing. When the high-temperature free gas in the arc chute attempts to flow back to the sealing upper cover from the arc chute, because the opening area of the second through hole is large, the gas encounters large resistance when attempting to flow back, so that the high-temperature free gas in the arc chute can be prevented from flowing back to the sealing upper cover.

In a possible implementation, a bendable groove is disposed on a side that is of the current-carrying copper busbar and that faces the base, and a projection of the bendable groove completely falls into a projection of the second through hole in the thickness direction of the sealing cover. After the piston breaks the current-carrying copper busbar, the outer wall surface of the piston squeezes the current-carrying copper busbar, so that the current-carrying copper busbar is bent and deformed. The bendable groove may increase a deformation capability of the bendable part of the current-carrying copper busbar. When the piston squeezes the current-carrying copper busbar, existence of the bendable groove makes the current-carrying copper busbar to be bent and deformed more easily along the bendable groove. A projection of the bendable groove in a Z direction completely falls into the projection of the second through hole. In this way, the bent current-carrying copper busbar does not interfere with the sealing lower cover, so that the piston can break the current-carrying copper busbar to disconnect the current.

In a possible implementation, the first channel includes a first subchannel and a second subchannel, the first subchannel is located on the side that is of the current-carrying copper busbar and that faces away from the base, and the second subchannel is located on a side that is of the current-carrying copper busbar and that is close to the base; and in an extension direction of the current-carrying copper busbar, a length of a projection overlapping part between the second subchannel and the current-carrying copper busbar in the thickness direction of the sealing cover is greater than a length of a projection overlapping part between the first subchannel and the current-carrying copper busbar in the thickness direction of the sealing cover. In this design, an opening area of the second subchannel is greater than an opening area of the first subchannel. A larger opening area makes resistance small during normal flowing of a gas, but large airflow resistance needs to be overcome during backflowing. When the high-temperature free gas in the arc chute attempts to flow back to the sealing upper cover from the arc chute, because the opening area of the second subchannel is large, the gas encounters large resistance when attempting to flow back, so that the high-temperature free gas in the arc chute can be prevented from flowing back to a side of the sealing cover in the positive Z direction.

In a possible implementation, on one side or two sides of the current-carrying copper busbar in a width direction of the current-carrying copper busbar, there is a spacing between a side wall of the first channel and the current-carrying copper busbar. After the current-carrying copper busbar is fractured, an arc is generated. The arc propagates along an edge of the spacing. A distance, between the current-carrying copper busbars obtained through fracture, along the edge of the spacing is a creepage distance. Through disposing of the spacing, arc discharge may be effectively avoided, to improve safety and reliability of the interrupter.

In a possible implementation, a ratio of a depth of the clamping slot to a thickness of the current-carrying copper busbar falls within a range of 0.3 to 0.7. The ratio of the depth of the clamping slot to the thickness of the current-carrying copper busbar falls within the range of 0.3 to 0.7, to not only ensure that the current-carrying copper busbar and the sealing cover are hermetically connected by using the clamping slot and the boss, but also ensure that a current can flow in the current-carrying copper busbar to connect a circuit.

In a possible implementation, the current-carrying copper busbar has a fracture opening, a tip part is disposed on a side that is of the piston and that faces the base, and a projection of the tip part overlaps with a projection of the fracture opening in an extension direction of the first channel. The fracture opening can reduce a thickness of the bendable part, so that the piston breaks the current-carrying copper busbar. The tip part is disposed on the side that is of the piston and that faces the base. The fracture opening is located right below the tip part in the Z direction, and in the Z direction, the projection of the tip part overlaps with the projection of the fracture opening. When the piston moves in the negative Z direction, the tip part of the piston is inserted into the fracture opening and breaks the current-carrying copper busbar at the fracture opening.

In a possible implementation, there is one fracture opening, and the fracture opening is located on one side of the current-carrying copper busbar in the thickness direction of the sealing cover; or there are two fracture openings, the two fracture openings are respectively located on two sides of the current-carrying copper busbar in the thickness direction of the sealing cover, and projections of the two fracture openings in the thickness direction of the sealing cover at least partially overlap. The fracture opening can reduce the thickness of the bendable part, so that the piston breaks the current-carrying copper busbar. The two fracture openings can further reduce the thickness of the bendable part, so that the current-carrying copper busbar is more easily broken by the piston.

In a possible implementation, the interrupter further includes a top cover, and the top cover is located on a side that is of the sealing cover and that faces away from the base; the sealing cover is provided with a second raised rib, and the top cover is provided with a second groove; and/or the sealing cover is provided with a second groove, and the top cover is provided with a second raised rib; the second raised rib is disposed around a periphery of an opening edge of the first channel; and the second raised rib is located in the second groove. In this design, it can be ensured that the gas in the arc chute is not leaked from a position between the top cover and the sealing cover even if the gas has been leaked from the first channel, which further improves gas tightness of the interrupter.

In a possible implementation, there is a third raised rib on the sealing cover, and the base is provided with a third groove; and/or the sealing cover is provided with a third groove, and the base is provided with a third raised rib; the third raised rib is disposed around the periphery of the opening edge of the first channel; and the third raised rib is located in the third groove. In this design, it can be ensured that the gas in the arc chute is not leaked from a position between the base and the sealing cover even if the gas has been leaked from the first channel, which further improves gas tightness of the interrupter.

In a possible implementation, there are at least two arc chutes; and the sealing cover is provided with a fourth raised rib, and the base is provided with a fourth groove; and/or the sealing cover is provided with a fourth groove, and the base is provided with a fourth raised rib; and two ends of the fourth raised rib are connected to the third raised rib, the fourth groove and/or the fourth raised rib are/is located between two adjacent arc chutes, and the fourth raised rib is located in the fourth groove and is fitted against an inner wall of the fourth groove. Through matching between the fourth raised rib and the fourth groove, two adjacent arc chutes can be isolated, to prevent gases in the two adjacent arc chutes from mutual penetration into the two adjacent arc chutes.

In a possible implementation, at least one of the second raised rib, the third raised rib, and the fourth raised rib is provided with a mounting hole, the mounting hole is configured for a fastener to pass through, and the fastener is configured to fasten the sealing cover and the base. A mounting hole is disposed on at least one of the second raised rib, the third raised rib, and the fourth raised rib, to not only seal the base and the sealing cover, but also fasten the sealing cover and the base. The fastener may be hidden in the mounting hole. Structures with a mounting hole such as the top cover, the sealing cover, and the base are all made of an insulating structure such as plastic. An inner wall of the mounting hole may insulate the fastener from an external conductive structure.

According to a second aspect, this application provides a power distribution device, including a connector and the interrupter according to any implementation of the first aspect. The connector is configured to be electrically connected to a power supply, and the interrupter is electrically connected between the connector and the power supply.

According to a third aspect, this application provides a vehicle, including a power supply and the power distribution device according to the second aspect. The power supply is electrically connected to the power distribution device, and the interrupter is electrically connected between the connector and the power supply.

### BRIEF DESCRIPTION OF DRAWINGS

FIG. 1 is a diagram of a photovoltaic energy storage system according to an implementation of this application;
FIG. 2 is a diagram of an energy storage system according to an implementation of this application;
FIG. 3 is a diagram of a vehicle energy storage system according to an implementation of this application;
FIG. 4 is an exploded diagram of a structure of an interrupter according to an implementation of this application;
FIG. 5 is a diagram of a structure of an interrupter according to an implementation of this application;
FIG. 6 is a diagram of a top view of an interrupter according to an implementation of this application;
FIG. 7 is a sectional view of a part A-A in FIG. 6;
FIG. 8 is a diagram of a structure of a current-carrying copper busbar according to an implementation of this application;
FIG. 9 is a diagram of a structure of an interrupter according to another implementation of this application;
FIG. 10 is an exploded diagram of a structure of an interrupter according to another implementation of this application;
FIG. 11 is an exploded diagram of a structure of an interrupter according to another implementation of this application;
FIG. 12 is a diagram of a structure of a sealing upper cover according to an implementation of this application;
FIG. 13 is a diagram of a structure of a sealing upper cover according to an implementation of this application;
FIG. 14 is a diagram of a structure of a sealing lower cover according to an implementation of this application;
FIG. 15 is a diagram of a structure of a sealing lower cover according to an implementation of this application;
FIG. 16 is a diagram of a top view of a sealing lower cover according to an implementation of this application;
FIG. 17 is a diagram of a structure in which a sealing upper cover and a current-carrying copper busbar are assembled according to an implementation of this application;
FIG. 18A is a diagram of a top view in which a sealing upper cover and a current-carrying copper busbar are assembled according to an implementation of this application;
FIG. 18B is an enlarged view of a part A in FIG. 18A;
FIG. 19 is a diagram of a structure in which a sealing lower cover and a current-carrying copper busbar are assembled according to an implementation of this application;
FIG. 20A is a diagram of a top view in which a sealing lower cover and a current-carrying copper busbar are assembled according to an implementation of this application;
FIG. 20B is an enlarged view of a part B in FIG. 20A;
FIG. 21 is a diagram of a size of a position of a first through hole and a position of a second through hole according to an implementation of this application;
FIG. 22 is a diagram of a relationship between a position of a bendable groove and a position of a second through hole according to an implementation of this application;
FIG. 23 is a diagram of a relationship between a position of a bendable groove and a position of a second through hole according to another implementation of this application;
FIG. 24 is a diagram of a relationship between a position of a bendable groove and a position of a second through hole according to another implementation of this application;
FIG. 25 is a diagram of a top view in which a sealing lower cover and a current-carrying copper busbar are assembled according to an implementation of this application;
FIG. 26 is a diagram of a top view in which a sealing cover and a current-carrying copper busbar are assembled according to an implementation of this application;
FIG. 27 is a diagram of a side view of a current-carrying copper busbar according to an implementation of this application;
FIG. 28 is a diagram of structures of a piston and a current-carrying copper busbar according to an implementation of this application;
FIG. 29 is a diagram in which a fracture opening is disposed on a current-carrying copper busbar according to an implementation of this application;
FIG. 30 is a diagram in which a fracture opening is disposed on a current-carrying copper busbar according to another implementation of this application;
FIG. 31 is a diagram in which a fracture opening is disposed on a current-carrying copper busbar according to another implementation of this application;
FIG. 32 is a diagram of a structure of an interrupter according to an implementation of this application; and
FIG. 33 is a diagram of a structure of a vehicle according to an implementation of this application.

### DESCRIPTION OF EMBODIMENTS

The following describes embodiments of this application with reference to the accompanying drawings in embodiments of this application.

For ease of understanding, the following first explains and describes English abbreviations and related technical terms used in embodiments of this application.

It should be noted that the described embodiments are merely some but not all of embodiments of this application. All other embodiments obtained by a person of ordinary skill in the art based on embodiments of this application without creative efforts shall fall within the protection scope of this application.

The terms used in the embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only a same field for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

It should be understood that "first", "second", and the like used in this application are merely used for distinguishing and description, but should not be understood as an indication or implication of relative importance or an indication or implication of a sequence.

In descriptions of this application, orientations or position relationships indicated by the terms "center", "upper", "lower", "front", "rear", "left", "right", "vertical", "horizontal", "top", "bottom", "inner", "outer", and the like are based on orientations or position relationships shown in the accompanying drawings, and are merely intended for ease of describing this application and simplifying descriptions, instead of indicating or implying that a specified apparatus or element needs to have a specific orientation, and be constructed and operated in the specific orientation. Therefore, this cannot be understood as a limitation on this application.

In this application, "within a range of ..." is used, except when it is separately specified that no end value is included, end values at both ends of the range are included by default. For example, within a range from 1 to 5, two values 1 and 5 are included.

In descriptions of this application, it should be noted that unless otherwise expressly specified and limited, terms "installation", "interconnection", and "connection" should be understood in a broad sense, for example, may be a fastened connection, a detachable connection, a pressing connection, or an integral connection. A person of ordinary skill in the art may understand specific meanings of the foregoing terms in this application based on specific cases.

An interrupter is an electronic element configured to connect or disconnect a current in one or more circuits. The interrupter can be used in a power system, to protect safe operation of the power system. When the circuit is overloaded or short-circuited or has another fault, the interrupter can automatically switch to a disconnected state to disconnect the current in the circuit, thereby playing a protection role. A piston is disposed in the interrupter. When the current is abnormal, a high-speed movement of the piston is triggered, so that the piston breaks a current-carrying copper busbar to disconnect the circuit. After the current-carrying copper busbar is fractured, an arc is generated at a fracture part. The arc is a gas discharge phenomenon, and occurs when the current passes through air or another insulation medium. After the current-carrying copper busbar is fractured, the circuit is disconnected, and electric field strength between current-carrying copper busbars obtained through fracture may be strong enough, so that a molecule in the air is ionized into free electrons and ions to form a conductive path, thereby generating the arc.

Disconnection time of the circuit is prolonged due to generation of the arc, and safe operation of the power system is easily endangered due to a temperature of the arc, which causes casualties and great property losses. In addition, when the piston breaks the current-carrying copper busbar and enters an arc chute, if gas tightness between the current-carrying copper busbar and a sealing cover is poor, a high-temperature free gas in the arc chute spreads to the current-carrying copper busbar, and free electrons and ions in the gas increase conductivity between the current-carrying copper busbars obtained through fracture, thereby reducing insulation performance between the current-carrying copper busbars obtained through fracture. Consequently, voltage breakdown occurs between fracture openings of the current-carrying copper busbars, and finally, the interrupter is damaged or even the entire power system is faulty.

To resolve the foregoing problem, this application provides an interrupter 10, which has high gas tightness and can avoid leakage of a gas in an arc chute. A generated arc may be quickly extinguished, so that the interrupter 10 can quickly disconnect a circuit, to protect safe operation of a power system.

The interrupter 10 in this application may be applied to the power system. The power system may include a power supply and a load. One terminal of the interrupter is connected to the power supply, and the other terminal is connected to the load.

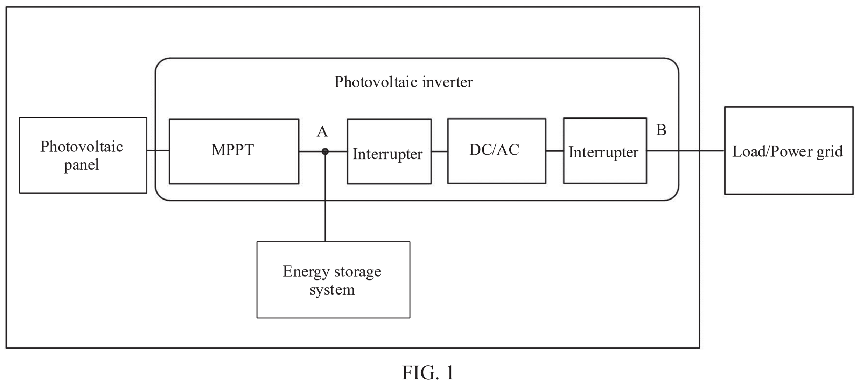

For example, the power system may include a photovoltaic inverter system. FIG. 1 is a diagram of a photovoltaic energy storage system according to an implementation of this application. As shown in FIG. 1, the photovoltaic inverter system includes a photovoltaic (photovoltaic, PV) panel and a photovoltaic inverter. The photovoltaic panel converts solar energy into electric energy. Because the photovoltaic panel generates a direct current, the direct current needs to be converted into an alternating current by using the photovoltaic inverter, to facilitate power transmission and utilization.

The photovoltaic inverter includes a direct current to alternating current (direct current to alternating current, DC/AC) converter, and the DC/AC converter is configured to convert the direct current into the alternating current.

The photovoltaic inverter further includes a maximum power point tracking (maximum power point tracking, MPPT) module. An MPPT apparatus is configured to track maximum voltage and current values, so that a power generation system outputs a current at a maximum power. The MPPT apparatus and a DC/AC module in the photovoltaic inverter may be disposed in a same packaged device, or may be disposed in different packaged devices.

The MPPT apparatus may include a direct current to direct current (direct current to direct g current, DC/DC) converter. The DC/DC converter is configured to perform voltage regulation processing (or voltage conversion processing) on a direct current generated by a PV module. A direct current obtained through voltage regulation may be output to an electric energy storage system. One terminal A of the DC/AC converter is connected to the MPPT apparatus and the energy storage system, and the other terminal B is configured to be connected to an alternating current power grid or an alternating current load. In this case, the DC/AC converter converts a direct current output by the MPPT apparatus or the energy storage system into an alternating current, and provides the alternating current for the alternating current load or the alternating current power grid.

In addition, the other terminal B of the DC/AC converter may be further connected to another energy storage system through an inverter (namely, a DC/AC converter). The inverter is configured to convert the alternating current from the photovoltaic inverter into a direct current, and store the direct current in the energy storage system. In addition, the direct current from the energy storage system may be converted into an alternating current, and the alternating current is provided to the alternating current load or the alternating current power grid.

As shown in FIG. 1, in an implementation, the interrupter provided in this application may be disposed in a circuit between the DC/AC converter and both the MPPT and the energy storage system. To be specific, one terminal of a current-carrying busbar of the interrupter is connected to the MPPT and the energy storage system, and one terminal of the current-carrying busbar of the interrupter is connected to the DC/AC converter. In this case, the interrupter operates in a direct current circuit. The interrupter may be configured to disconnect an electrical connection between the MPPT and the DC/AC converter, and the interrupter may be configured to disconnect an electrical connection between the energy storage system and the DC/AC converter.

In another implementation, the interrupter provided in this application may be disposed between the DC/AC converter and an output interface of a photovoltaic system. To be specific, the interrupter may disconnect an electrical connection between the DC/AC converter and the alternating current load or the alternating current power grid. In other words, one terminal of a current-carrying busbar of the interrupter is connected to the DC/AC converter, and one terminal of the current-carrying busbar of the interrupter is connected to the power grid or the load. In this case, the interrupter operates in an alternating current circuit. The interrupter may be configured to disconnect an electrical connection between the photovoltaic system and the alternating current load or the alternating current power grid.

The interrupter provided in this application may be further disposed in the photovoltaic inverter. In this case, the photovoltaic inverter includes the DC/AC converter, the MPPT apparatus, a detection circuit, the interrupter, and a controller.

An input terminal of the MPPT apparatus is configured to be connected to the photovoltaic module, and an output terminal of the MPPT apparatus is configured to be directly or indirectly connected to an input terminal of the DC/AC converter.

For example, the interrupter is connected between the output terminal of the MPPT apparatus and the input terminal of the DC/AC converter.

Alternatively, the interrupter is connected between an output terminal of the direct current to alternating current DC/AC converter and an external power grid or the load.

The detection circuit is configured to detect an electrical parameter of the DC/AC converter. For example, the electrical parameter includes at least one of an input terminal voltage of the DC/AC converter, an input terminal current of the DC/AC converter, an output terminal voltage of the DC/AC converter, and an output terminal current of the DC/AC converter.

The controller is configured to: when the electrical parameter of the DC/AC converter exceeds a preset threshold, control a power mechanism of the interrupter to drive a piston to move, so that a first insulation part cuts off the current-carrying busbar, to disconnect an electrical connection between the output terminal of the MPPT apparatus and the input terminal of the direct current to alternating current DC/AC converter, or disconnect an electrical connection between the output terminal of the direct current to alternating current DC/AC converter and the external power grid or the load. Subsequently, a structure of the interrupter and actions of parts after the interrupter is started are described in detail.

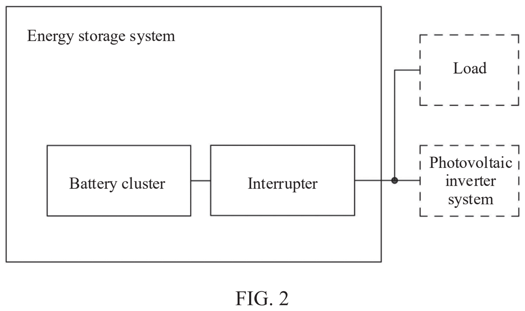

For example, the power system may include an energy storage system. FIG. 2 is a diagram of an energy storage system according to an implementation of this application. As shown in FIG. 2, the energy storage system includes one or more battery clusters, each battery cluster includes one or more battery packs, and the battery cluster includes an input/output interface. The input/output interface is configured to output a direct current to a load or a photovoltaic inverter system, and the input/output interface is configured for input of a direct current output by the photovoltaic inverter system. The energy storage system further includes the interrupter provided in this application. The interrupter may be disposed between the input/output interface (or an output bus of the battery cluster) and both the photovoltaic system and the load. In this case, the interrupter operates in the direct current circuit. The interrupter may be configured to disconnect an electrical connection between the energy storage system and a direct current load or the photovoltaic inverter system.

In addition, although not shown, the energy storage system may further include one or more DC/DC converters, and one or more battery management systems (battery management system, BMS). Each battery pack corresponds to one BMS. The BMS is usually configured to implement functions such as dynamic monitoring of battery charge/discharge, battery equalization, and evaluation of a state of charge of a battery. The DC/DC converter is configured for power conversion of the battery pack.

The battery pack may be a single battery, or may be a battery cluster including a plurality of batteries. Specifically, the battery may alternatively be one or a combination of a lead-carbon battery, a lithium iron phosphate battery, a ternary lithium battery, a sodium-sulfur battery, and a flow battery.

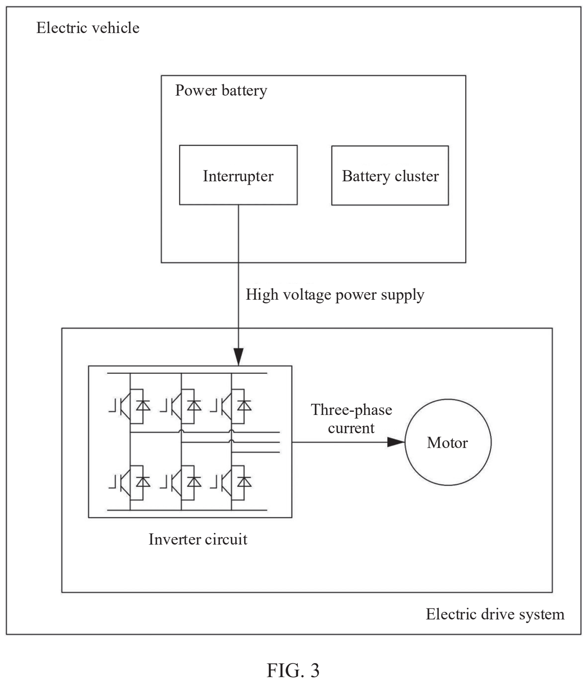

For example, the power system may include a power system in an electric vehicle. FIG. 3 is a diagram of a vehicle energy storage system according to an implementation of this application, and is specifically a diagram of a structure of an example of a power system of an electric vehicle that has an interrupter provided in this application. As shown in FIG. 3, the electric vehicle includes a power battery and an electric drive system, the power battery includes a battery cluster, and the battery cluster includes one or more battery packs connected in series. The electric drive system includes an inverter circuit and a motor. An output port of the battery cluster provides a direct current for the inverter circuit, and the inverter circuit converts the direct current into a three-phase alternating current and transmits the three-phase alternating current to the motor, to drive the motor.

In an implementation, the interrupter provided in this application may be disposed in a circuit between the battery cluster and the inverter circuit. To be specific, one terminal of the current-carrying busbar of the interrupter is connected to the battery cluster, and one terminal of the current-carrying busbar of the interrupter is connected to a direct current bus of the inverter circuit. In this case, the interrupter operates in the direct current circuit. The interrupter may be configured to disconnect an electrical connection between the battery cluster and the electric drive system.

In another implementation, the interrupter provided in this application may be disposed in a circuit between the inverter circuit and the motor. To be specific, the interrupter may disconnect an electrical connection between the inverter circuit and the motor. In other words, one terminal of the current-carrying busbar of the interrupter is connected to an alternating current bus of the inverter circuit, and one terminal of the current-carrying busbar of the interrupter is connected to the motor. In this case, the interrupter operates in an alternating current circuit. The interrupter may be configured to disconnect the electrical connection between the inverter circuit and the motor.

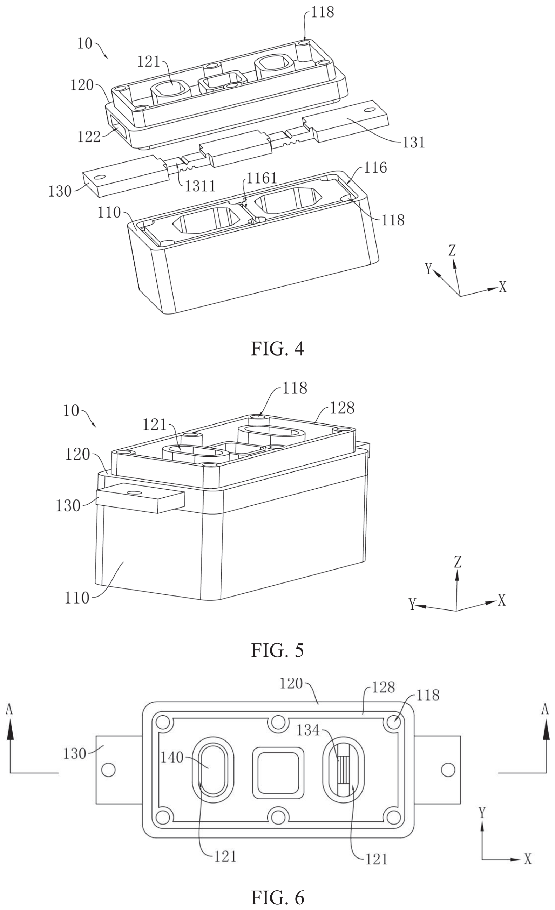

This application provides an interrupter 10. As shown in FIG. 4, FIG. 5, FIG. 6, and FIG. 7, the interrupter 10 includes a base 110, a sealing cover 120, a current-carrying copper busbar 130, and a piston 140. The base 110 has an arc chute 111, and the arc chute 111 can extinguish an arc. After the current-carrying copper busbar 130 is fractured, an arc is generated. The arc is led by the piston into the arc chute 111 and is extinguished by the arc chute 111.

The arc chute 111 has an opening in a positive Z direction, the sealing cover 120 is disposed on a side of the opening of the arc chute 111 in the positive Z direction, the sealing cover 120 is fastened to the base 110, and the sealing cover 120 may be fastened to the base 110 by using a bolt. For example, as shown in FIG. 4 and FIG. 5, a mounting hole 118 is disposed on each of the sealing cover 120 and the base 110, and the bolt passes through a mounting hole 118 located on the sealing cover 120 and a mounting hole 118 located on the base 110, to fasten the sealing cover 120 and the base 110. After the sealing cover 120 is fastened to the base 110, the sealing cover 120 is hermetically connected to the base 110 at a contact surface between the sealing cover 120 and the base 110, to avoid leakage of a high-temperature free gas in the arc chute 111. The sealing cover 120 may be made of an insulation material. The sealing cover 120 has a first channel 121 that passes through a thickness direction of the sealing cover 120. As shown in FIG. 4, the thickness direction of the sealing cover 120 is a Z direction. The first channel 121 extends in the Z direction and passes through the sealing cover 120, and one end of the first channel 121 in a negative Z direction communicates with the opening of the arc chute 111. The current-carrying copper busbar 130 passes through the first channel 121 and is partially accommodated in the first channel 121. A second channel 122 that passes through the sealing cover 120 is further disposed in the sealing cover 120, and the second channel 122 crosses the first channel 121. The first channel 121 extends in the Z direction and passes through the sealing cover 120, the second channel 122 extends in an X direction and passes through the sealing cover 120, and the first channel 121 and the second channel 122 communicate at an intersection in an extension direction, so that a part of the current-carrying copper busbar 130 is accommodated in the first channel 121 and is accommodated at a communicating part between the first channel 121 and the second channel 122. It may be understood that the second channel 122 is configured to accommodate the current-carrying copper busbar 130, and the current-carrying copper busbar 130 accommodated in the second channel 122 completely occupies internal space of the second channel 122. When the current-carrying copper busbar 130 is taken out from the second channel 122, a second channel 122 that passes through the sealing cover 120 in the X direction may be displayed on the sealing cover 120.

The current-carrying copper busbar 130 is disposed in parallel with the sealing cover 120, and the current-carrying copper busbar 130 passes through the sealing cover 120 in a direction perpendicular to the thickness direction of the sealing cover 120. The thickness direction of the sealing cover 120 is the Z direction, and the X direction is perpendicular to the Z direction. The current-carrying copper busbar 130 passes through the sealing cover 120 in the X direction. The current-carrying copper busbar 130 may be partially located inside the sealing cover 120, and two sides of the current-carrying copper busbar 130 in the X direction are located outside the sealing cover 120. The current-carrying copper busbar 130 is configured to be electrically connected a circuit, and can transmit a current. One terminal that is of the current-carrying copper busbar 130 and that is located outside the sealing cover 120 is electrically connected to a power supply, and the other terminal is electrically connected to a load. The interrupter 10 is connected to a used circuit by using the current-carrying copper busbar 130.

A sealed structure in which a boss 1251 and a clamping slot 1311 are matched is formed between the sealing cover 120 and the current-carrying copper busbar 130. The boss 1251 may be disposed on the sealing cover 120, and the clamping slot 1311 may be disposed on the current-carrying copper busbar 130; or the clamping slot 1311 may be disposed on the sealing cover 120, and the boss 1251 may be disposed on the current-carrying copper busbar 130. Specifically, the sealing cover 120 has a first contact surface 125 that is hermetically attached to the current-carrying copper busbar 130, and the current-carrying copper busbar 130 has a second contact surface 131 that is hermetically attached to the sealing cover 120. The first contact surface 125 may be located on a side of the current-carrying copper busbar 130 in the positive Z direction, and the first contact surface 125 may also be located on a side of the current-carrying copper busbar 130 in the negative Z direction. The second contact surface 131 may be a surface of the side of the current-carrying copper busbar 130 in the positive Z direction, or the second contact surface 131 may be a surface of the side of the current-carrying copper busbar 130 in the negative Z direction. When the first contact surface 125 is located on the side of the current-carrying copper busbar 130 in the positive Z direction, the second contact surface 131 is a surface of the side of the current-carrying copper busbar 130 in the positive Z direction. When the first contact surface 125 is located on the side of the current-carrying copper busbar 130 in the negative Z direction, the second contact surface 131 is a surface of the side of the current-carrying copper busbar 130 in the negative Z direction. The first contact surface 125 is hermetically attached to the second contact surface 131, and the first contact surface 125 may be directly in contact with the second contact surface 131 for hermetic attaching; or the first contact surface 125 and the second contact surface 131 may be indirectly in contact, provided that sealing between the current-carrying copper busbar 130 and the sealing cover 120 is ensured. In this application, the first contact surface 125 is located on the side of the current-carrying copper busbar 130 in the positive Z direction, the second contact surface 131 is a surface of the side of the current-carrying copper busbar 130 in the positive Z direction, and the first contact surface 125 is directly in contact with the second contact surface 131.

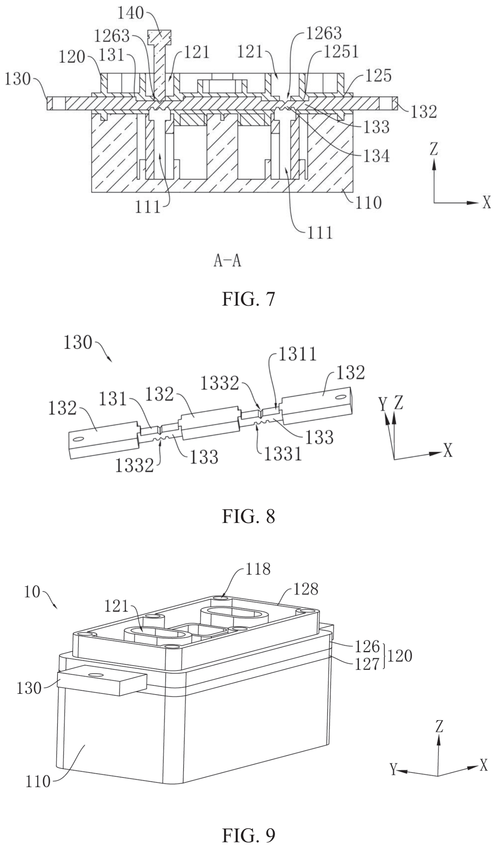

As shown in FIG. 7, the first contact surface 125 is located on the side of the current-carrying copper busbar 130 in the positive Z direction, there is the boss 1251 on the first contact surface 125, the boss 1251 and the first contact surface 125 are of an integral structure, and a part of the first contact surface 125 protrudes in the negative Z direction to form the boss 1251. The first channel 121 passes through the sealing cover 120 in the Z direction, the current-carrying copper busbar 130 passes through the sealing cover 120 in the Z direction, and a partial structure of the current-carrying copper busbar 130 is located in the first channel 121. A part that is of the current-carrying copper busbar 130 and that is located in the first channel 121 includes a thinned part 134, and a thickness of the thinned part 134 is less than a thickness of another part of the current-carrying copper busbar 130. The surface of the side of the current-carrying copper busbar 130 in the positive Z direction is the second contact surface 131, the second contact surface 131 includes a surface of the thinned part 134 in the positive Z direction and a surface of the another part that is of the current-carrying copper busbar 130 and that is different from the thinned part 134 in the positive Z direction, and the surface of the thinned part 134 in the positive Z direction is located on a side, in the negative Z direction, of the surface of the another part that is of the current-carrying copper busbar 130 and that is different from the thinned part 134 in the positive Z direction. The surface of the thinned part 134 in the negative Z direction is flush with the surface, in the negative Z direction, of the another part that is of the current-carrying copper busbar 130 and that is different from the thinned part 134, so that the thinned part 134 and the another part of the current-carrying copper busbar 130 form the clamping slot 1311.

The boss 1251 is located in the clamping slot 1311, and is hermetically connected to an inner wall surface of the clamping slot 1311. Through matching and a hermetic connection between the boss 1251 and the clamping slot 1311, a contact area between the sealing cover 120 and the current-carrying copper busbar 130 may be increased, and a gas flow path is prolonged and becomes complex, to form better sealing between the current-carrying copper busbar 130 and the sealing cover 120, thereby effectively preventing a gas from being leaked from a contact part between the current-carrying copper busbar 130 and the sealing cover 120, and ensuring gas tightness between the current-carrying copper busbar 130 and the sealing cover 120. In addition, through matching between the boss 1251 and the clamping slot 1311, the current-carrying copper busbar 130 and the sealing cover 120 may be limited, to prevent the current-carrying copper busbar 130 from moving relative to the sealing cover 120.

At least a part of the piston 140 is accommodated in the first channel 121, and in the thickness direction (Z direction) of the sealing cover 120, a projection of the piston 140 at least partially overlap with the thinned part 134. In the Z direction, the projection of the piston 140 may partially overlap with or completely overlap with the thinned part 134. The piston 140 can move in the first channel 121 to break the current-carrying copper busbar 130 and enter the arc chute 111. When the piston 140 does not move, one end of the piston 140 in the negative Z direction is accommodated in the first channel 121. When the piston 140 moves, the piston 140 breaks the thinned part 134 of the current-carrying copper busbar 130 and enters the arc chute 111, and one end of the piston 140 in the positive Z direction is accommodated in the first channel 121. The piston 140 may be driven by a power mechanism, so that the piston 140 can move in the first channel 121 to break the thinned part 134 of the current-carrying copper busbar 130 and enter the arc chute 111.

In an embodiment, as shown in FIG. 7, the power mechanism (not shown in the figure) is disposed on a side that is of the piston 140 and that faces away from the base 110, and the power mechanism is disposed on a side of the piston 140 in the positive Z direction. There are at least two power mechanisms, which are connected to the piston 140 in a one-to-one matching manner. Each piston 140 has a dedicated power mechanism to drive the piston 140 to move. A side of the power mechanism in the negative Z direction may be directly in contact with the side of the piston 140 in the positive Z direction, and the side of the power mechanism in the negative Z direction may also be spaced from the side of the piston 140 in the positive Z direction. The power mechanism may receive a control signal, and generate, based on the control signal, a pushing force that drives the piston 140 to move. In an embodiment, a controller may be integrated in the interrupter 10, and the controller sends the control signal to the power mechanism. In an embodiment, the controller may alternatively be disposed independently of the interrupter 10. The power mechanism may generate, through an explosion, or the like, a pushing force that drives the piston 140 to move. In an embodiment, the power mechanism may be an ignition device. The ignition device ignites and explodes when receiving an ignition signal sent by the controller, and an impact force generated by the explosion drives the piston 140 to move. The interrupter 10 may be a pyrotechnic interrupter.

When the power mechanism does not operate, the piston 140 is located on a side of the arc chute 111 in the positive Z direction. When the power mechanism operates, the power mechanism drives the piston 140 to break the thinned part 134 of the current-carrying copper busbar 130, and enters the arc chute 111 corresponding to the piston 140 in the negative Z direction from an upper part of the arc chute 111. The arc is formed after the current-carrying copper busbar 130 is fractured. After the piston 140 enters the arc chute 111, there is an annular airway between an outer wall of the piston 140 and a side wall of the arc chute 111, and the annular airway surrounds an outer side of the piston 140. It may be understood that a shape of the opening of the arc chute 111 may be the same as a shape of a part that is of the piston 140 and that is located in the arc chute 111, and a size of the opening of the arc chute 111 is greater than a size of the part that is of the piston 140 and that is located in the arc chute 111, so that the annular airway is formed between the outer wall of the piston 140 and the side wall of the arc chute 111. The piston 140 may lead the arc into the annular airway. A long annular airway can extend the arc, to quickly increase a voltage of the arc, and implement quick arc extinguishing.

There is good gas tightness between the sealing cover 120 and the current-carrying copper busbar of the interrupter 10 provided in this application. The sealed structure in which the boss 1251 and the clamping slot 1311 are matched is formed between the sealing cover 120 and the current-carrying copper busbar 130. The boss 1251 may be located in the clamping slot 1311, so that the first contact surface 125 of the sealing cover 120 can be hermetically fitted against the second contact surface 131 of the current-carrying copper busbar 130. Through a hermetic connection between the boss 1251 and the clamping slot 1311, better sealing between the current-carrying copper busbar 130 and the sealing cover 120 can be implemented. In this application, there is good gas tightness between the current-carrying copper busbar 130 and the sealing cover 120, so that a high-temperature free gas in the arc chute 111 can be prevented from spreading to the current-carrying copper busbar 130 in the positive Z direction. Therefore, the interrupter 10 can quickly disconnect a current, to protect safe operation of the power system.

In a possible implementation, as shown in FIG. 4, FIG. 5, FIG. 7, and FIG. 8, the clamping slot 1311 is located on a side that is of the current-carrying copper busbar 130 and that faces away from the base 110, the boss 1251 is disposed on the sealing cover 120, and the boss 1251 extends into the clamping slot 1311 from a side that is of the current-carrying copper busbar 130 and that faces away from the base 110.

The current-carrying copper busbar 130 includes a connecting part 132 and a bendable part 133, and the bendable part 133 is located between two adjacent connecting parts 132. A connecting part 132 is connected between two adjacent bendable parts 133. A part of connecting parts 132 of the current-carrying copper busbar 130 may be located outside the sealing cover 120, and is electrically connected to the power supply and the load separately. The current can pass through both the connecting part 132 and the bendable part 133. When the piston 140 moves in the negative Z direction, the piston 140 breaks the bendable part 133 and enters the arc chute 111. A quantity of bendable parts 133 is the same as a quantity of arc chutes 111. In FIG. 7, there are two arc chutes 111, there are also two bendable parts 133, and the bendable parts 133 match the arc chutes 111 in a one-to-one manner. A surface of the bendable part 133 in the negative Z direction and a surface of the connecting part 132 in the negative Z direction are located on a same plane. A part of the bendable part 133 in the first channel 121 is the thinned part 134, and a thickness of the thinned part 134 in the Z direction is less than a thickness of the connecting part 132 in the Z direction. Therefore, the clamping slot 1311 is formed between the thinned part 134 and the connecting part 132. The clamping slot 1311 is located on a side of the thinned part 134 in the positive Z direction, and the boss 1251 is located on the sealing cover 120 and extends into the clamping slot 1311 in the negative Z direction. Through matching between the boss 1251 and the clamping slot 1311, the sealing cover 120 is fastened to the current-carrying copper busbar 130, and gas tightness is improved.

In a possible implementation, the boss 1251 includes a first through hole 1263, and the first through hole 1263 may pass through the boss 1251 in the Z direction. The first through hole 1263 communicates with the first channel 121, and the first through hole 1263 may be a part of the first channel 121. The first through hole 1263 may be located on the side of the thinned part 134 in the positive Z direction. A projection of the first through hole 1263 in the thickness direction (Z direction) of the sealing cover 120 at least partially overlaps with the thinned part 134. A projection of the first through hole 1263 in the Z direction may partially overlap with or may completely overlap with the thinned part 134. The boss 1251 may be located on the sealing cover 120, or may be located on the current-carrying copper busbar 130.

In an embodiment, as shown in FIG. 4, FIG. 5, FIG. 7, and FIG. 8, the boss 1251 is located on a side of the sealing cover 120 in the negative Z direction and protrudes in the negative Z direction, and the boss 1251 is located on a side of the current-carrying copper busbar 130 in the positive Z direction. The boss 1251 includes the first through hole 1263, the first channel 121 passes through the boss 1251 in the Z direction, the piston 140 is accommodated in the first channel 121, the current-carrying copper busbar 130 is accommodated in the sealing cover 120, and the piston 140 may pass through the boss 1251 through the first through hole 1263, break the thinned part 134 of the current-carrying copper busbar 130, and enter the arc chute 111.

In a possible implementation, as shown in FIG. 7, an edge of the first through hole 1263 is fitted against an outer wall surface of the piston 140. As shown in FIG. 7, a shape of the first through hole 1263 is the same as a shape of a part that is of the piston 140 and that can pass through the first through hole 1263 and enter the arc chute 111. After the piston 140 breaks the current-carrying copper busbar 130 and enters the arc chute 111, the piston 140 blocks the first through hole 1263, and the edge of the first through hole 1263 may be fitted against the outer wall surface of the piston 140. In this design, it can be ensured that good sealing is formed between the piston 140 and the first through hole 1263. When the current-carrying copper busbar 130 is broken by the piston 140, the high-temperature free gas in the arc chute 111 can be prevented from flowing in the positive Z direction, to improve insulation performance of the current-carrying copper busbar 130, and avoid voltage breakdown between current-carrying copper busbars 130 obtained through fracture. In addition, the piston 140 moves relative to the first through hole 1263, to reduce friction between the piston 140 and the edge of the first through hole 1263.

In a possible implementation, as shown in FIG. 9, FIG. 10, and FIG. 11, the sealing cover 120 includes a sealing upper cover 126 and a sealing lower cover 127, the sealing upper cover 126 is located on a side of the sealing lower cover 127 in the positive Z direction, and the sealing upper cover 126, the sealing lower cover 127, and the base 110 are connected in sequence in the negative Z direction. An accommodation groove 1261 is disposed between the sealing upper cover 126 and the sealing lower cover 127. The accommodation groove 1261 may be disposed on the sealing upper cover 126, or the accommodation groove 1261 may also be disposed on the sealing lower cover 127, or the accommodation groove 1261 may be disposed on both the sealing upper cover 126 and the sealing lower cover 127. The accommodation groove 1261 may be configured to enclose the current-carrying copper busbar 130. When the sealing upper cover 126 and the sealing lower cover 127 are closed, the current-carrying copper busbar 130 is located between the sealing upper cover 126 and the sealing lower cover 127, and the part of the current-carrying copper busbar 130 is located in the accommodation groove 1261. In this case, the accommodation groove 1261 between the sealing upper cover 126 and the sealing lower cover 127 can enclose the current-carrying copper busbar 130, and the current-carrying copper busbar 130 is fastened in the sealing cover 120.

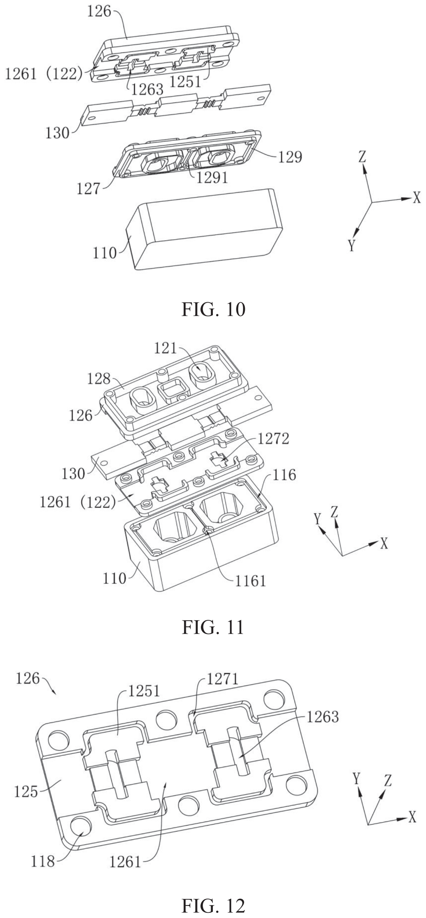

In an embodiment, as shown in FIG. 10 and FIG. 11, the accommodation groove 1261 is disposed on each of the sealing upper cover 126 and the sealing lower cover 127. When the sealing upper cover 126 and the sealing lower cover 127 are closed, an accommodation groove 1261 on the sealing upper cover 126 and an accommodation groove 1261 on the sealing lower cover 127 enclose a second channel 122, so that the current-carrying copper busbar 130 can be sandwiched between the sealing upper cover 126 and the sealing lower cover 127 by closing the sealing upper cover 126 and the sealing lower cover 127. The accommodation groove 1261 is located on two sides of the current-carrying copper busbar 130 in the Z direction. An inner wall surface of the accommodation groove 1261 is fitted against surfaces of the current-carrying copper busbars 130 on the two sides of the current-carrying copper busbar 130 in the Z direction. The current-carrying copper busbar 130 is hermetically fitted against the sealing upper cover 126 and the sealing lower cover 127 separately at a contact part.

In a possible implementation, the sealing upper cover 126 is provided with a first raised rib 1262, and the sealing lower cover 127 is provided with a first groove 1271; and/or the sealing lower cover 127 is provided with a first raised rib 1262, and the sealing upper cover 126 is provided with a first groove 1271. In an embodiment, the sealing upper cover 126 is provided with the first raised rib 1262; and the sealing lower cover 127 is provided with the first groove 1271. In an embodiment, the sealing lower cover 127 is provided with the first raised rib 1262, and the sealing upper cover 126 is provided with the first groove 1271. In an embodiment, the sealing upper cover 126 is provided with the first raised rib 1262 and the first groove 1271, and the sealing lower cover 127 is provided with the first groove 1271 and the first raised rib 1262.

After the first raised rib 1262 is inserted into the first groove 1271, the first raised rib 1262 is located in the first groove 1271 and is fitted against an inner wall of the first groove 1271. The first raised rib 1262 may match the first groove 1271, so that the sealing upper cover 126 and the sealing lower cover 127 can be connected together by being closed. There are at least two first raised ribs 1262, which are respectively located on the two sides of the current-carrying copper busbar 130. There may be two, three, or four first raised ribs 1262, or the like. A quantity of first raised ribs 1262 located on the two sides of the current-carrying copper busbar 130 may be equal or may be unequal. The first raised rib 1262 may be in a straight-line shape or may be in a bent shape. A shape of the first raised rib 1262 is not limited in this application. Both ends of the first raised rib 1262 are fitted against the current-carrying copper busbar 130, and the first raised rib 1262 may limit the current-carrying copper busbar 130, to prevent the current-carrying copper busbar 130 from moving relative to the sealing cover 120.

An example in which the sealing lower cover 127 is provided with the first raised rib 1262 and the sealing lower cover 127 is provided with the first groove 1271 is used for description.

In an embodiment, as shown in FIG. 12, FIG. 14, FIG. 17, and FIG. 19, the sealing lower cover 127 is provided with the first raised rib 1262, and the first raised rib 1262 protrudes in the positive Z direction on a surface of the side of the sealing lower cover 127 in the positive Z direction. There are four first raised ribs 1262, and shapes of the four first raised ribs 1262 are exactly the same. Two first raised ribs 1262 are respectively disposed on two sides of the current-carrying copper busbar 130 in a Y direction. In addition, two first raised ribs 1262 located on a same side of the current-carrying copper busbar 130 are spaced apart. The first raised rib 1262 is in a curved shape, and both ends of the first raised rib 1262 are fitted against a side surface of the current-carrying copper busbar 130. The sealing upper cover 126 is provided with the first grooves 1271 matching the first raised rib 1262, and there are also four first grooves 1271. When the sealing upper cover 126 and the sealing lower cover 127 are closed, the first raised rib 1262 is located in the first groove 1271, and an outer wall of the first raised rib 1262 is fitted against the inner wall of the first groove 1271. Through matching between the first raised rib 1262 and the first groove 1271, gas tightness between the current-carrying copper busbar 130, the sealing upper cover 126, and the sealing lower cover 127 can be improved, and gas leakage is avoided.

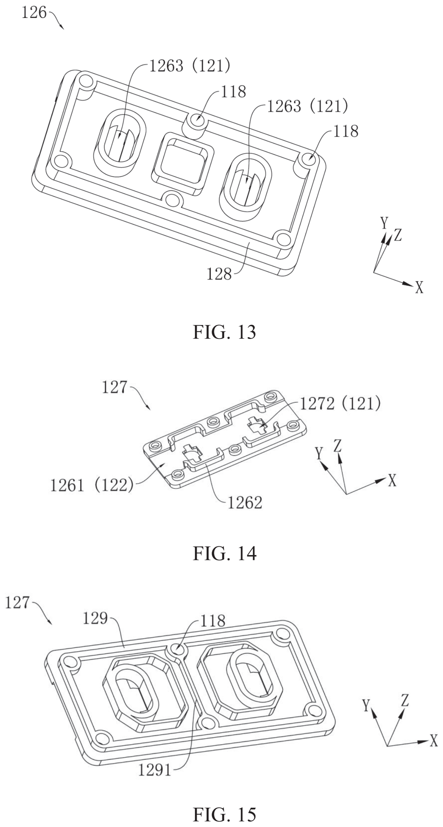

In a possible implementation, as shown in FIG. 13 and FIG. 14, the sealing upper cover 126 is provided with the first through hole 1263, the sealing lower cover 127 is provided with a second through hole 1272, and the first through hole 1263 and the second through hole 1272 communicate to form a part of the first channel 121. The first through hole 1263 passes through the sealing upper cover 126 in the Z direction, and the second through hole 1272 passes through the sealing lower cover 127 in the Z direction. The first through hole 1263 may communicate with the second through hole 1272, and the first through hole 1263 and the second through hole 1272 can form the part of the first channel 121. After breaking the current-carrying copper busbar 130, the piston 140 passes through the first through hole 1263 and the second through hole 1272 in sequence, and then enters the arc chute 111.

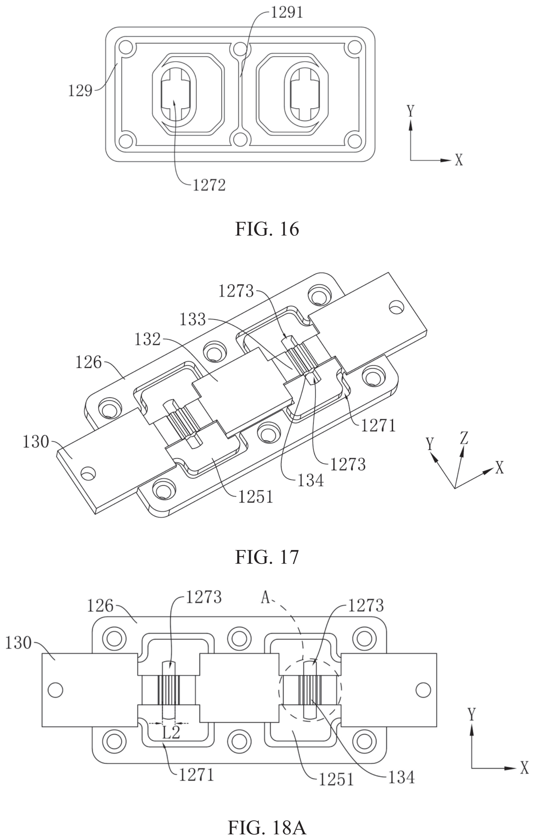

As shown in FIG. 17, FIG. 18A, FIG. 19, and FIG. 20A, on one side or two sides of the current-carrying copper busbar 130 in a width direction of the current-carrying copper busbar 130, there is a spacing 1273 between the current-carrying copper busbar 130 and each of the edge of the first through hole 1263 and an edge of the second through hole 1272. The width direction of the current-carrying copper busbar 130 is the Y direction. The spacing 1273 may be located on a side of the current-carrying copper busbar 130 in the Y direction, or may be located on two sides of the current-carrying copper busbar 130 in the Y direction. The first through hole 1263, the spacing 1273, and the second through hole 1272 communicate in sequence in the Z direction. A partial edge of the first through hole 1263 and a partial edge of the thinned part 134 enclose an edge of the spacing 1273. A partial edge of the second through hole 1272 and a partial edge of the thinned part 134 enclose an edge of the spacing 1273. A projection of the spacing 1273 in the Z direction does not overlap with the current-carrying copper busbar 130.

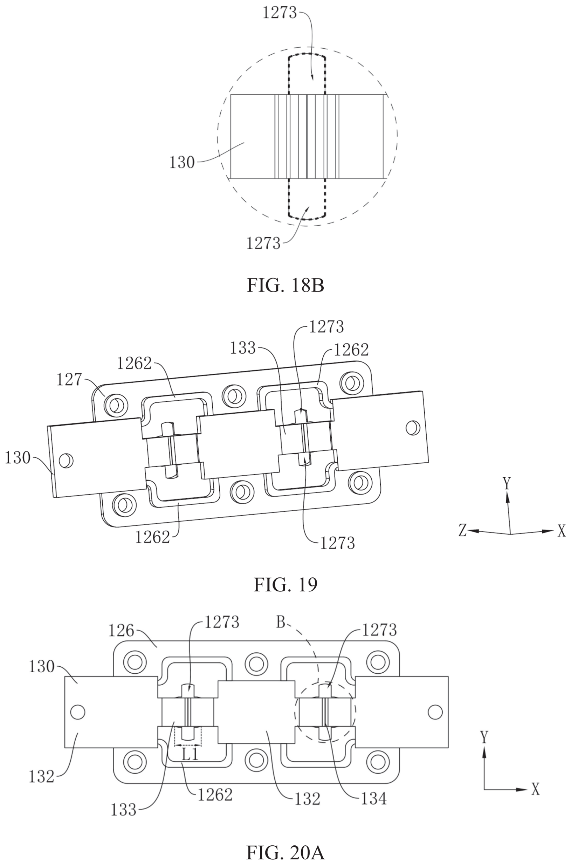

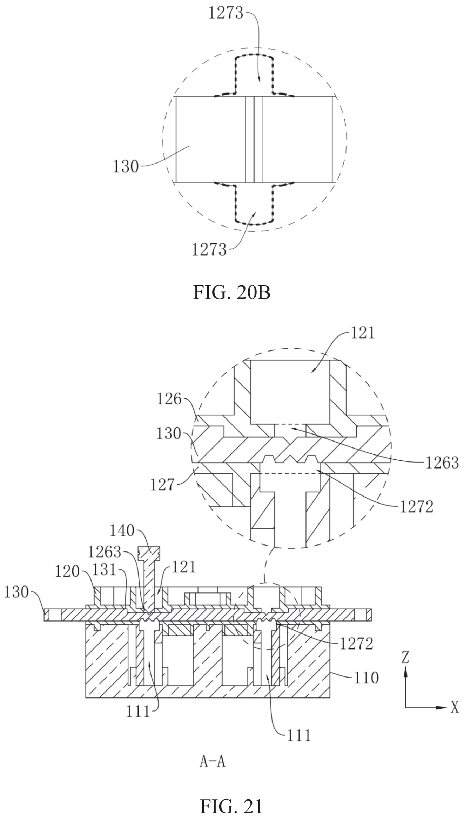

After the current-carrying copper busbar 130 is fractured, an arc is generated. The arc propagates along the edge of the spacing 1273. A distance, between the current-carrying copper busbars 130 obtained through fracture, along the edge of the spacing 1273 is a creepage distance. As shown in FIG. 18B and FIG. 20B, for ease of understanding of the creepage distance, in FIG. 18B and FIG. 20B, a dashed line is added to the edge of the spacing 1273 to indicate the creepage distance. Through disposing of the spacing 1273, arc discharge may be effectively avoided, to improve safety and reliability of the interrupter 10. The edge of the spacing 1273 formed between the current-carrying copper busbar 130 and the second through hole is long, to increase the creepage distance and reduce a possibility of arc discharge.

In an embodiment, as shown in FIG. 17, FIG. 18A, FIG. 19, and FIG. 20A, the spacing 1273 is located on the two sides of the current-carrying copper busbar 130 in the Y direction. The thinned part 134 is located in a part of the first channel 121 formed by communicating the first through hole 1263 and the second through hole 1272. There is the spacing 1273 between the two sides of this part of the current-carrying copper busbar 130 in the Y direction and each of the first through hole 1263 and the second through hole 1272. It may be understood that a length of the thinned part 134 in the Y direction is less than a length of the first through hole 1263 in the Y direction, and is also less than a length of the second through hole 1272 in the Y direction.

In a possible implementation, as shown in FIG. 4, FIG. 18A, and FIG. 20A, in an extension direction of the current-carrying copper busbar 130, a length of a projection overlapping part between the second through hole 1272 and the current-carrying copper busbar 130 in the thickness direction of the sealing cover 120 is greater than a length of a projection overlapping part between the first through hole 1263 and the current-carrying copper busbar 130 in the thickness direction of the sealing cover 120.

The extension direction of the current-carrying copper busbar 130 is the X direction, and the thickness direction of the sealing cover 120 is the Z direction. The length of the projection overlapping part between the second through hole 1272 and the current-carrying copper busbar 130 in the Z direction is a length L1 in FIG. 20A, and the length of the projection overlapping part between the first through hole 1263 and the current-carrying copper busbar 130 in the Z direction is a length L2 in FIG. 18A. L1 is greater than L2. Therefore, an opening area of the second through hole 1272 is greater than an opening area of the first through hole 1263. As shown in FIG. 21, the second through hole 1272 is located on a side of the first through hole 1263 in the negative Z direction, L1 is greater than L2, an opening of the first through hole 1263 and an opening of the second through hole 1272 are shown by using a dashed line, and the opening of the first through hole 1263 and the opening of the second through hole 1272 are in a shape similar to an inverted horn. The opening of the second through hole 1272 is greater than the opening of the first through hole 1263, and a large opening makes resistance small during normal flowing (flowing from the positive Z direction to the negative Z direction) of a gas, but large airflow resistance needs to be overcome during backflowing (flowing from the negative Z direction to the positive Z direction). When the high-temperature free gas in the arc chute 111 attempts to flow back to the sealing upper cover 126 from the arc chute 111, because the opening of the second through hole 1272 is large, the gas encounters large resistance when attempting to flow back, so that the high-temperature free gas in the arc chute 111 can be prevented from flowing back to the sealing upper cover 126, to improve gas tightness.

In a possible implementation, as shown in FIG. 7 and FIG. 8, a bendable groove 1331 is disposed on a side that is of the current-carrying copper busbar 130 and that faces the base 110, and a projection of the bendable groove 1331 completely falls into a projection of the second through hole 1272 in the thickness direction (Z direction) of the sealing cover 120. The current-carrying copper busbar 130 has the bendable part 133, the bendable part 133 is partially located in the first channel 121, and the bendable part 133 is provided with the bendable groove 1331. After the piston 140 breaks the current-carrying copper busbar 130, the outer wall surface of the piston 140 squeezes the current-carrying copper busbar 130, so that the current-carrying copper busbar 130 is bent and deformed. The bendable groove 1331 may increase a deformation capability of the bendable part 133 of the current-carrying copper busbar 130. When the piston 140 squeezes the current-carrying copper busbar 130, existence of the bendable groove 1331 makes the current-carrying copper busbar 130 to be bent and deformed more easily along the bendable groove 1331. There may be one, two, or three bendable grooves 1331, or the like. A shape of an opening of the bendable groove 1331 may be a trapezoid as in FIG. 7, or the opening of the bendable groove 1331 may be in a "V" shape, or the opening of the bendable groove 1331 may be in a square shape. A shape of a fracture opening 1332 is not limited in this application. The bendable groove 1331 is disposed on the side of the current-carrying copper busbar 130 in the negative Z direction, the opening of the bendable groove 1331 faces the base 110, and the opening of the bendable groove 1331 is closer to a wing-shaped opening of the sealing lower cover 127. The second through hole 1272 on the sealing lower cover 127 is designed on a periphery of the bendable groove 1331, to ensure that the second through hole 1272 on the sealing lower cover 127 is designed more conveniently while it is easy to bend the current-carrying copper busbar 130.

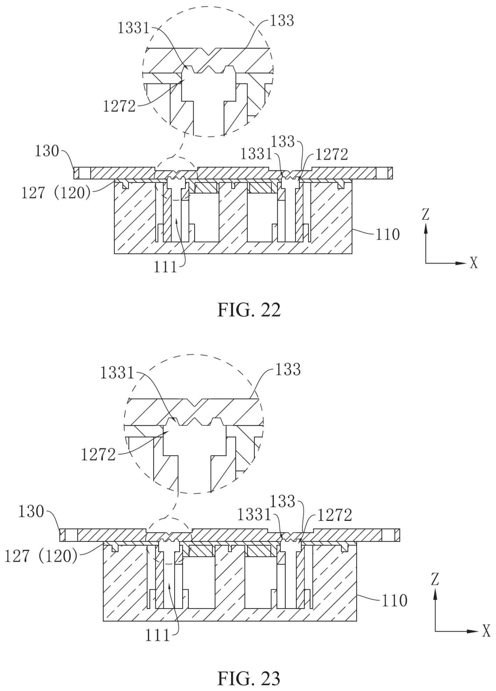

The projection of the bendable groove 1331 in the thickness direction (Z direction) of the sealing cover 120 completely falls into the projection of the second through hole 1272. In the Z direction, one edge of the opening of the bendable groove 1331 may overlap with one edge of the second through hole 1272 (as shown in FIG. 22). The edge of the bendable groove 1331 may alternatively not overlap with the edge of the second through hole 1272. In the Z direction, a projection of the edge of the bendable groove 1331 is located in a projection of the second through hole 1272, and does not overlap with the projection of the second through hole 1272 (as shown in FIG. 23). The bendable part 133 further has the fracture opening 1332. When the piston 140 breaks the current-carrying copper busbar 130, the bendable part 133 is fractured at the fracture opening 1332, and bendable grooves 1331 on two sides of the fracture opening 1332 in the X direction make the current-carrying copper busbars 130 obtained through fracture bent in a direction toward the side wall of the arc chute 111. A projection of the bendable groove 1331 in the Z direction completely falls into the projection of the second through hole 1272. In this way, the bent current-carrying copper busbar 130 does not interfere with the sealing lower cover 127, so that the piston 140 can break the current-carrying copper busbar 130 to disconnect the current.

In an embodiment, as shown in FIG. 23, one bendable part 133 of the current-carrying copper busbar 130 is provided with two bendable grooves 1331, the two bendable grooves 1331 are spaced apart in the X direction, the two bendable grooves 1331 are symmetrically disposed on the two sides of the fracture opening 1332 in the X direction, and openings of the bendable grooves 1331 face the negative Z direction. In the Z direction, the projection of the edge of the bendable groove 1331 does not overlap with the projection of the edge of the second through hole 1272. The projection of the edge of the bendable groove 1331 is located on a side of the projection of the edge of the second through hole 1272 in a positive X direction. When the piston 140 breaks the current-carrying copper busbar 130, the bendable part 133 is fractured at the fracture opening 1332, and bendable grooves 1331 on two sides of the fracture opening 1332 in the X direction make the current-carrying copper busbars 130 obtained through fracture bent in the direction toward the side wall of the arc chute 111.

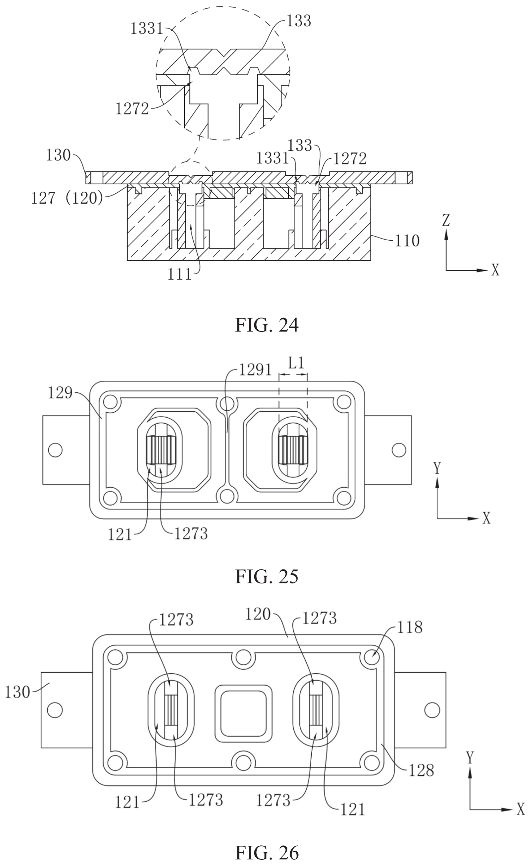

In an embodiment, as shown in FIG. 24, one bendable part 133 of the current-carrying copper busbar 130 is provided with two bendable grooves 1331, the two bendable grooves 1331 are spaced apart in the X direction, the two bendable grooves 1331 are symmetrically disposed on the two sides of the fracture opening 1332 in the X direction, and openings of the bendable grooves 1331 face the negative Z direction. In the Z direction, the projection of the edge of the bendable groove 1331 does not overlap with the projection of the edge of the second through hole 1272. The projection of the edge of the bendable groove 1331 is located on a side of the projection of the edge of the second through hole 1272 in a negative X direction. When the piston 140 breaks the current-carrying copper busbar 130, the bendable part 133 is fractured at the fracture opening 1332, and bendable grooves 1331 on two sides of the fracture opening 1332 in the X direction make the current-carrying copper busbars 130 obtained through fracture bent in the direction toward the side wall of the arc chute 111.

It may be understood that, when the sealing cover 120 is of an integral structure, the projection of the bendable groove 1331 in the Z direction may at least partially fall into a projection of a second subchannel.

In a possible implementation, as shown in FIG. 25 and FIG. 26, on one side or two sides of the current-carrying copper busbar 130 in the width direction of the current-carrying copper busbar 130, there is a spacing 1273 between a side wall of the first channel 121 and the current-carrying copper busbar 130. In this application, the width direction of the current-carrying copper busbar 130 is the Y direction. After the current-carrying copper busbar 130 is fractured, an arc is generated. The arc propagates along the edge of the spacing 1273. A distance, between the current-carrying copper busbars 130 obtained through fracture, along the edge of the spacing 1273 is a creepage distance. Through disposing of the spacing 1273, arc discharge may be effectively avoided, to improve safety and reliability of the interrupter 10.

In an embodiment, as shown in FIG. 25 and FIG. 26, the spacing 1273 is located on the two sides of the current-carrying copper busbar 130 in the Y direction. There is the spacing 1273 between the side wall of the first channel 121 in the Y direction and two sides of the thinned part 134 in the Y direction. A projection of the spacing 1273 in the Z direction does not overlap with the current-carrying copper busbar 130. It may be understood that a length of the thinned part 134 in the Y direction is less than a length of an edge of the first channel 121 in the Y direction.

In a possible implementation, as shown in FIG. 25 and FIG. 26, the first channel 121 includes a first subchannel and a second subchannel, the first subchannel is located on the side that is of the current-carrying copper busbar 130 and that faces away from the base, and the second subchannel is located on a side that is of the current-carrying copper busbar 130 and that is close to the base; and in an extension direction of the current-carrying copper busbar 130, a length of a projection overlapping part between the second subchannel and the current-carrying copper busbar 130 in the thickness direction of the sealing cover 120 is greater than a length of a projection overlapping part between the first subchannel and the current-carrying copper busbar 130 in the thickness direction of the sealing cover 120. The thickness direction of the sealing cover 120 is the Z direction. The extension direction of the current-carrying copper busbar 130 is the X direction.

The first subchannel and the second subchannel are disposed in sequence in the negative Z direction. The length of the projection overlapping part between the second subchannel and the current-carrying copper busbar 130 in the Z direction is a length L1 in FIG. 26, and the length of the projection overlapping part between the first subchannel and the current-carrying copper busbar 130 in the Z direction is a length L2 in FIG. 26. L1 is greater than L2. Therefore, an opening area of the second subchannel is greater than an opening area of the first subchannel. The second subchannel is located on a side of the first subchannel in the negative Z direction, and the opening area of the second subchannel is greater than the opening area of the first subchannel. A larger opening area makes resistance small during normal flowing of a gas, but large airflow resistance needs to be overcome during backflowing. When the high-temperature free gas in the arc chute 111 attempts to flow back to the sealing upper cover 126 from the arc chute 111, because the opening area of the second subchannel is large, the gas encounters large resistance when attempting to flow back, so that the high-temperature free gas in the arc chute 111 can be prevented from flowing back to a side of the sealing cover 120 in the positive Z direction.

In a possible implementation, a ratio of a depth of the clamping slot 1311 to a thickness of the current-carrying copper busbar 130 falls within a range of 0.3 to 0.7. As shown in FIG. 7 and FIG. 8, the current-carrying copper busbar 130 includes the connecting part 132 and the bendable part 133, and the clamping slot 1311 may be disposed on the bendable part 133 of the current-carrying copper busbar 130. In FIG. 8, the clamping slot 1311 is disposed on a side of the bendable part 133 in the positive Z direction, the depth of the clamping slot 1311 is L3, and the thickness of the current-carrying copper busbar 130 is a thickness that is of the current-carrying copper busbar 130 and that exists when the clamping slot 1311 is not disposed on the current-carrying copper busbar 130. In this embodiment of this application, the thickness L4 of the current-carrying copper busbar 130 is a thickness of the connecting part 132. A ratio of L3 to L4 ranges from 0.3 to 0.7. The ratio of L3 to L4 may be 0.3, or the ratio of L3 to L4 may be 0.5, or the ratio of L3 to L4 may be 0.7. The ratio of the depth of the clamping slot 1311 to the thickness of the current-carrying copper busbar 130 falls within the range of 0.3 to 0.7, to not only ensure that the current-carrying copper busbar 130 and the sealing cover 120 are hermetically connected by using the clamping slot 1311 and the boss 1251, but also ensure that a current can flow in the current-carrying copper busbar 130 to connect a circuit.

In a possible implementation, the current-carrying copper busbar 130 has a fracture opening 1332, a tip part 141 is disposed on a side that is of the piston 140 and that faces the base 110, and a projection of the tip part 141 overlaps with a projection of the fracture opening 1332 in an extension direction of the first channel 121.

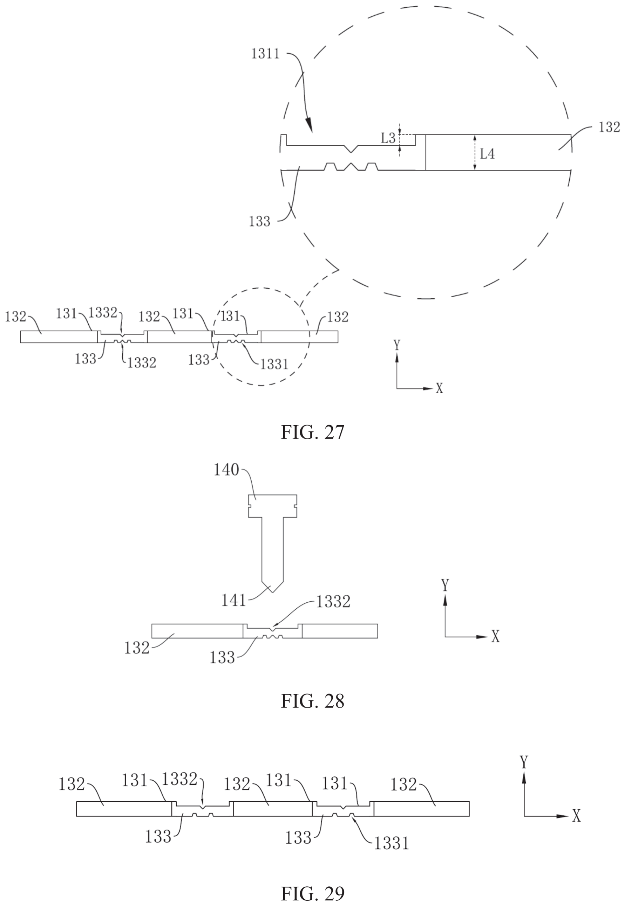

As shown in FIG. 28, the extension direction of the first channel 121 is the Z direction, the current-carrying copper busbar 130 includes a connecting part 132 and a bendable part 133, and the bendable part 133 is provided with the fracture opening 1332. The fracture opening 1332 can reduce the thickness of the bendable part 133, so that the piston 140 breaks the current-carrying copper busbar 130. The tip part 141 is disposed on the side that is of the piston 140 and that faces the base 110 (an end of the piston 140 in the negative Z direction). The fracture opening 1332 is located right below the tip part 141 in the Z direction, and in the Z direction, the projection of the tip part 141 overlaps with the projection of the fracture opening 1332. When the piston 140 moves in the negative Z direction, the tip part 141 of the piston 140 is inserted into the fracture opening 1332 and breaks the current-carrying copper busbar 130 at the fracture opening 1332.

In a possible implementation, there is one fracture opening 1332, and the fracture opening 1332 is located on one of the two sides of the current-carrying copper busbar 130 in the Z direction.

Alternatively, there are two fracture openings 1332, the two fracture openings 1332 are respectively located on the two sides of the current-carrying copper busbar 130 in the Z direction, and shapes of the two fracture openings 1332 located on the two sides of the current-carrying copper busbar 130 in the Z direction may be the same or may be different. The projections of the two fracture openings 1332 in the Z direction at least partially overlap. The projections of the two fracture openings 1332 in the Z direction may partially overlap or may completely overlap.

In an embodiment, as shown in FIG. 29, there is one fracture opening 1332, the fracture opening 1332 is located on one side of the current-carrying copper busbar 130 in the positive Z direction, and the fracture opening 1332 faces the tip part 141 of the piston 140. When the piston 140 moves in the negative Z direction, the tip part 141 of the piston 140 is directly in contact with the fracture opening 1332, so that the piston 140 breaks the current-carrying copper busbar 130.

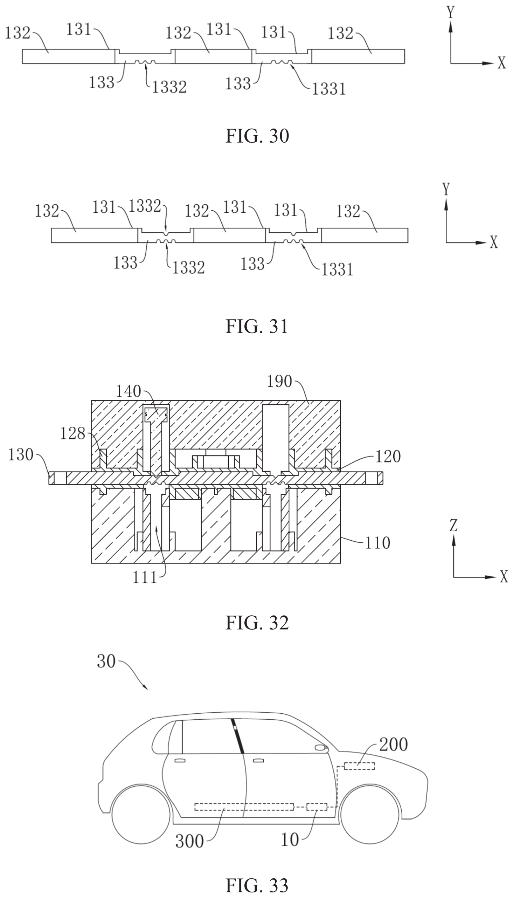

In an embodiment, as shown in FIG. 30, there is one fracture opening 1332, and the fracture opening 1332 is located on one side of the current-carrying copper busbar 130 in the negative Z direction.

In an embodiment, as shown in FIG. 27, there are two fracture openings 1332, the two fracture openings 1332 are respectively located on the two sides of the current-carrying copper busbar 130 in the Z direction, and shapes of the fracture openings 1332 located on the two sides of the current-carrying copper busbar 130 in the Z direction may be the same. The projections of the two fracture openings 1332 in the Z direction completely overlap. Both the two fracture openings 1332 are located right below the piston 140 in the Z direction, and the two fracture openings 1332 can further reduce the thickness of the bendable part 133, so that the current-carrying copper busbar 130 is more easily broken by the piston 140.

The shape of the fracture opening 1332 may be a "V" shape as in FIG. 27, or the shape of the fracture opening 1332 may be a trapezoid (as shown in FIG. 31), or the shape of the fracture opening 1332 may be a trapezoid. The shape of the fracture opening 1332 is not limited in this application.

In a possible implementation, as shown in FIG. 32, the interrupter 10 further includes a top cover 190, the top cover 190 is located on a side that is of the sealing cover 120 and that faces away from the base 110, the top cover 190 is located on a side of the sealing cover 120 in a positive Z direction, and the top cover 190, the sealing cover 120, and the base 110 are stacked in sequence in the negative Z direction. The top cover 190 is disposed on the side of the sealing cover 120 in the positive Z direction. After the top cover 190 and the sealing cover 120 are closed and fastened, an internal structure of the top cover 190, for example, a drive mechanism, can be protected. The top cover 190 and the sealing cover 120 are hermetically connected on a contact surface, to prevent a gas inside the interrupter 10 from being leaked from a position between the top cover 190 and the sealing cover 120.

A second raised rib 128 is disposed on the sealing cover 120, and a second groove (filled with the second raised rib 128) is disposed on the top cover 190. When the second raised rib 128 is disposed on the sealing cover 120, the second raised rib 128 may be located on one side of the sealing cover 120 in the positive Z direction, and extend in the positive Z direction. Alternatively, a second groove is disposed on the sealing cover 120, and a second raised rib 128 is disposed on the top cover 190. When the second raised rib 128 is disposed on the top cover 190, the second raised rib 128 may be located on one side of the top cover 190 in the negative Z direction, and the second raised rib extends in the negative Z direction. Alternatively, a second raised rib 128 and a second groove are disposed on the sealing cover 120, and a second groove and a second raised rib 128 are disposed on the top cover 190.

The second raised rib 128 is disposed around a periphery of an opening edge of the first channel 121, the first channel 121 is disposed on the sealing cover 120, and when the second raised rib 128 is located on the sealing cover 120, the second raised rib 128 is disposed around the periphery of the opening edge of the first channel 121. It may be understood that, when the second raised rib 128 is located on the top cover 190, after the top cover 190 and the sealing cover 120 are closed, a position relationship between the second raised rib 128 on the top cover 190 and the first channel 121 on the sealing cover 120 is also that the second raised rib 128 is disposed around the periphery of the opening edge of the first channel 121. After the top cover 190 and the sealing cover 120 are closed, the second raised rib 128 is located in the second groove and is fitted against an inner wall of the second groove. In a stacking direction (Z direction) of the top cover 190 and the sealing cover 120, a projection of the arc chute 111 is completely located in a projection of the second raised rib 128, to ensure that the gas in the arc chute 111 is not leaked from a position between the top cover 190 and the sealing cover 120 even if the gas has been leaked from the first channel 121, which further improves gas tightness of the interrupter 10.

In an embodiment, the sealing cover 120 is of an integral structure, the second raised rib is disposed on one side of the sealing cover 120 in the positive Z direction, and the second groove is disposed on one side of the top cover 190 in the negative Z direction. The second raised rib 128 extends in the positive Z direction. The second raised rib 128 is disposed around a periphery of the first through hole 1263. In this embodiment of this application, the second raised rib 128 is disposed on the sealing cover 120 around the sealing cover 120, to form a shape similar to a square. The first channel 121 is located inside the second raised rib 128, and a projection of the first channel 121 in the Z direction is also located inside the projection of the second raised rib 128. When the top cover 190 and the sealing cover 120 are closed, the second raised rib 128 is located in the second groove, and an outer wall of the second raised rib 128 is fitted against an inner wall of the second groove. Through matching between the second raised rib 128 and the second groove, gas tightness between the sealing cover 120 and the top cover 190 can be improved. Even if the gas in the arc chute 111 is leaked through the first channel 121, the gas cannot be leaked from the position between the top cover 190 and the sealing cover 120 due to existence of the second raised rib 128 and the second groove.

In an embodiment, as shown in FIG. 11 and FIG. 32, the sealing cover 120 may include a sealing upper cover 126 and a sealing lower cover 127, and the top cover 190 is located on one side of the sealing upper cover 126 in the positive Z direction. The top cover 190, the sealing upper cover 126, the sealing lower cover 127, and the base 110 are stacked in sequence in the negative Z direction. A second raised rib 128 is disposed on the sealing upper cover 126, and a second groove is disposed on the top cover 190. The second raised rib 128 is located in the second groove, and an outer wall of the second raised rib 128 is fitted against an inner wall of the second groove, so that the top cover 190 and the sealing upper cover 126 can be hermetically connected while the top cover 190 and the sealing upper cover 126 are closed. Structures of the second raised rib 128 and the second groove are the same as structures of the second raised rib 128 and the second groove when the sealing cover 120 is of an integral structure. Details are not described herein again in this application.

In a possible implementation, a third raised rib 129 is disposed on the sealing cover 120, and a third groove 116 is disposed on the base 110. When the third raised rib 129 is disposed on the sealing cover 120, the third raised rib 129 may be located on one side of the sealing cover 120 in the negative Z direction, and extend in the negative Z direction. Alternatively, a third groove 116 is disposed on the sealing cover 120, and a third raised rib 129 is disposed on the base 110. When the third raised rib 129 is disposed on the base 110, the third raised rib 129 may be located on one side of the base 110 in the positive Z direction, and the third raised rib extends in the positive Z direction. Alternatively, a third raised rib 129 and a third groove 116 are disposed on the sealing cover 120, and a third groove 116 and a third raised rib 129 are disposed on the base 110.

The third raised rib 129 is disposed around a periphery of an opening edge of the first channel 121, the first channel 121 is disposed on the sealing cover 120, and when the third raised rib 129 is located on the sealing cover 120, the third raised rib 129 is disposed around the periphery of the opening edge of the first channel 121. It may be understood that, when the third raised rib 129 is located on the base 110, after the base 110 and the sealing cover 120 are closed, a position relationship between the third raised rib 129 on the base 110 and the first channel 121 on the sealing cover 120 is also that the third raised rib 129 is disposed around the periphery of the opening edge of the first channel 121. After the base 110 and the sealing cover 120 are closed, the third raised rib 129 is located in the third groove 116 and is fitted against an inner wall of the third groove 116. In a stacking direction (Z direction) of the sealing cover 120 and the base 110, a projection of the arc chute 111 is completely located in a projection of the third raised rib 129, to ensure that the gas in the arc chute 111 is not leaked from a position between the base 110 and the sealing cover 120 even if the gas has been leaked from the first channel 121, which further improves gas tightness of the interrupter 10.

In an embodiment, the sealing cover 120 is of an integral structure, a third raised rib is disposed on one side of the sealing cover 120 in the negative Z direction, and a third groove 116 is disposed on one side of the base 110 in the positive Z direction. The third raised rib 129 extends in the negative Z direction. The third raised rib 129 is disposed around a periphery of the first through hole 1263. In this embodiment of this application, the third raised rib 129 is disposed on the sealing cover 120 around the sealing cover 120, to form a shape similar to a square. The first channel 121 is located inside the third raised rib 129, and a projection of the first channel 121 in the Z direction is also located inside the projection of the third raised rib 129. When the base 110 and the sealing cover 120 are closed, the third raised rib 129 is located in the third groove 116, and an outer wall of the third raised rib 129 is fitted against an inner wall of the third groove 116. Through matching between the third raised rib 129 and the third groove 116, gas tightness between the sealing cover 120 and the base 110 can be improved. Even if the gas in the arc chute 111 is leaked through the first channel 121, the gas cannot be leaked from a position between the base 110 and the sealing cover 120 due to existence of the third raised rib 129 and the third groove 116.

In an embodiment, as shown in FIG. 9, FIG. 10, and FIG. 11, the sealing cover 120 may include a sealing upper cover 126 and a sealing lower cover 127, a third raised rib 129 is disposed on the sealing lower cover 127, and a third groove 116 is disposed on the base 110. The third raised rib 129 is located in the third groove 116, and an outer wall of the third raised rib 129 is fitted against an inner wall of the third groove 116, so that the base 110 and the sealing lower cover 127 can be hermetically connected while the base 110 and the sealing lower cover 127 are closed. Structures of the third raised rib 129 and the third groove 116 are the same as structures of the third raised rib 129 and the third groove 116 when the sealing cover 120 is of an integral structure. Details are not described herein again in this application.

In a possible implementation, as shown in FIG. 7, FIG. 15, and FIG. 16, there are at least two arc chutes 111. There may be two, three, or four arc chutes 111, or the like. The arc chutes 111 are spaced apart on the base 110. A fourth raised rib 1291 is disposed on the sealing cover 120, and a fourth groove 1161 is disposed on the base 110. When the fourth raised rib 1291 is disposed on the sealing cover 120, the fourth raised rib 1291 may be located on a side of the sealing cover 120 in the negative Z direction, and extend in the negative Z direction. Alternatively, a fourth groove 1161 is disposed on the sealing cover 120, and a fourth raised rib 1291 is disposed on the base 110. When the fourth raised rib 1291 is disposed on the base 110, the fourth raised rib 1291 may be located on one side of the base 110 in the positive Z direction, and the fourth raised rib extends in the positive Z direction. Alternatively, a fourth raised rib 1291 and a fourth groove 1161 are disposed on the sealing cover 120, and a fourth groove 1161 and a fourth raised rib 1291 are disposed on the base 110.

Two ends of the fourth raised rib 1291 are connected to the third raised rib 129, and the fourth raised rib 1291 and the third raised rib 129 may be of an integral structure or may be two connected structures. The fourth groove 1161 and/or the fourth raised rib 1291 are/is located between two adjacent arc chutes 111. This means that when the fourth groove 1161 and/or the fourth raised rib 1291 are/is located on the base 110, the fourth groove 1161 and/or the fourth raised rib 1291 are/is located between the two adjacent arc chutes 111; or when the fourth groove 1161 and/or the fourth raised rib 1291 are/is located on the sealing cover 120, after the sealing cover 120 and the base 110 are closed, a position relationship between the arc chute 111 and both the fourth groove 1161 and/or the fourth raised rib 1291 is also that the fourth groove 1161 and/or the fourth raised rib 1291 are/is located between the two adjacent arc chutes 111. After the base 110 and the sealing cover 120 are closed, the fourth raised rib 1291 is located in the fourth groove 1161 and is fitted against an inner wall of the fourth groove 1161. Through matching between the fourth raised rib 1291 and the fourth groove 1161, two adjacent arc chutes 111 can be isolated, to prevent gases in the two adjacent arc chutes 111 from mutual penetration.

In an embodiment, the sealing cover 120 is of an integral structure, a fourth raised rib 1291 is disposed on one side of the sealing cover 120 in the negative Z direction, and a fourth groove 1161 is disposed on one side of the base 110 in the positive Z direction. The fourth raised rib 1291 extends in the negative Z direction. There are two arc chutes 111 on the base 110. The fourth raised rib 1291 and the fourth groove 1161 are located between the two arc chutes 111. The third raised rib 129 is disposed on the sealing cover 120 around the sealing cover 120, to form a shape similar to a square. The fourth raised rib 1291 and the third raised rib 129 may be of an integral structure, and the fourth raised rib 1291 is located in the third raised rib 129. In addition, two ends of the fourth raised rib 1291 are connected to the third raised rib 129, and a cavity enclosed by the third raised rib 129 and a wall surface of the sealing cover 120 in the negative Z direction is separated into two sub-cavities, which match the arc chutes 111 in a one-to-one manner. After the sealing cover 120 and the base 110 are closed, the third raised rib 129 is located in the third groove 116, and an outer wall of the third raised rib 129 is fitted against an inner wall of the third groove 116. The fourth raised rib 1291 is located in the fourth groove 1161, and an outer wall of the fourth raised rib 1291 is fitted against an inner wall of the fourth groove 1161, to isolate the two adjacent arc chutes 111. In this design, gas tightness between the base 110 and the sealing cover 120 can be further improved, to prevent the high-temperature free gas in the arc chute 111 from being discharged. In addition, the two arc chutes 111 are isolated, to prevent gas in different arc chutes 111 from mutual penetration.

In an embodiment, as shown in FIG. 9, FIG. 10, and FIG. 11, the sealing cover 120 may include a sealing upper cover 126 and a sealing lower cover 127, a fourth raised rib 1291 is disposed on the sealing lower cover 127, and a fourth groove 1161 is disposed on the base 110. There are two arc chutes 111 on the base 110. The fourth raised rib 1291 is located in the fourth groove 1161, and an outer wall of the fourth raised rib 1291 is fitted against an inner wall of the fourth groove 1161, so that the base 110 and the sealing lower cover 127 can be hermetically connected while the base 110 and the sealing lower cover 127 are closed. Structures of the fourth raised rib 1291 and the fourth groove 1161 are the same as structures of the fourth raised rib 1291 and the fourth groove 1161 when the sealing cover 120 is of an integral structure. Details are not described herein again in this application.

In a possible implementation, at least one of the second raised rib 128, the third raised rib 129, and the fourth raised rib 1291 is provided with a mounting hole 118, and the mounting hole 118 is configured to match a fastener to fasten the sealing cover 120 to the base 110. Mounting holes 118 on the second raised rib 128, the third raised rib 129, and the fourth raised rib 1291 respectively pass through the second raised rib 128, the third raised rib 129, and the fourth raised rib 1291 in the Z direction. On at least one of the second raised rib 128, the third raised rib 129, and the fourth raised rib 1291, the mounting hole 118 may implement sealing through matching between a raised rib and a groove. The fastener may pass through the mounting hole to fasten the sealing cover 120 and the base. The fastener may be a screw, a pin, or the like. The fastener may be hidden in the mounting hole 118. Structures with a mounting hole 118 such as the top cover 190, the sealing cover 120, and the base 110 are all made of an insulating structure such as plastic. An inner wall of the mounting hole may insulate the fastener from an external conductive structure.

In an embodiment, as shown in FIG. 9, FIG. 10, and FIG. 11, a mounting hole 118 is disposed on each of the second raised rib 128, the third raised rib 129, and the fourth raised rib 1291, and the mounting hole 118 passes through the second raised rib 128, the third raised rib 129, and the fourth raised rib 1291 in the Z direction. A mounting hole 118 on the second raised rib 128 and a mounting hole 118 on the third raised rib 129 have a same size and are coaxially disposed. The mounting hole 118 on the second raised rib 128 and a mounting hole 118 on the fourth raised rib 1291 have a same size and are coaxially disposed. A mounting hole 118 is also disposed on the base 110. The mounting hole 118 on the base 110, the mounting hole 118 on the second raised rib 128, and the mounting hole 118 on the third raised rib 129 have a same size and are coaxially disposed. The fastener may sequentially pass through the mounting hole 118 on the second raised rib 128, the mounting hole 118 on the third raised rib 129, and the mounting hole 118 on the base 110, to fasten the sealing cover 120 and the base 110. The fastener may further sequentially pass through the mounting hole 118 on the second raised rib 128, the mounting hole 118 on the fourth raised rib 1291, and the mounting hole 118 on the base 110, to fasten the sealing cover 120 and the base 110. A mounting hole 118 is disposed on the second raised rib 128, the third raised rib 129, and the fourth raised rib 1291, to not only seal the base 110 and the sealing cover 120, but also fasten the sealing cover 120 and the base 110.

This application further provides a power distribution device, including a connector and the interrupter 10 described in any one of the foregoing implementations. The connector is configured to be electrically connected to a power supply, and the connector is electrically connected between the interrupter 10 and the power supply.

An embodiment of this application further provides a power distribution device. The power distribution device is configured to implement circuit deployment and distribution, and may be used in a power distribution system of a wireless high-power 5G (5th generation mobile communication technology, 5G for short) base station, or may be used in a power distribution system of a home circuit. An application field of the power distribution device is not limited in this embodiment, and may be applied to a line connection in any field.

The power distribution device may include a connector and an interrupter 10. The connector is electrically connected to the interrupter 10 as an intermediate transition connecting piece, the connector is electrically connected to a power supply, the interrupter 10 is electrically connected between the connector and the power supply, and a connection hole may be disposed on the current-carrying copper busbar 130 of the interrupter 10 to be connected to the connector. The connector can enable each interrupter 10 to be connected to the power supply. The power supply may be a mains supply, a generator, a battery, or the like.

This application further provides a vehicle 30. As shown in FIG. 33, the vehicle 30 includes a power supply 300 and the power distribution device described in the foregoing implementations. The interrupter 10 is electrically connected between the connector 200 and the power supply 300. The vehicle 30 provided in this application includes but is not limited to an electric vehicle, a motorcycle, a bus, or the like. The electric vehicle is used as an example. The electric vehicle includes a power supply 300 and a connector 200. The power supply 300 may be a battery pack in the electric vehicle. The interrupter 10 is electrically connected between the connector 200 and the power supply 300. When a circuit system in the electric vehicle is faulty, the interrupter 10 is disconnected to disconnect a current.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the scope of the technical solutions of embodiments of this application, and these modifications and replacements shall fall within the protection scope of this application.

## Claims

1. An interrupter, comprising:
a base having an arc chute;
a sealing cover, disposed on one side of an opening of the arc chute, wherein the sealing cover has a first channel that passes through a thickness direction of the sealing cover, and the first channel communicates with the opening of the arc chute;
a current-carrying busbar, wherein the current-carrying busbar is disposed in parallel with the sealing cover, the current-carrying busbar passes through the sealing cover in a direction perpendicular to the thickness direction of the sealing cover, a sealed structure in which a boss and a clamping slot are matched is formed between the sealing cover and the current-carrying busbar, a part that is of the current-carrying busbar and that is located in the first channel comprises a thinned part, and a thickness of the thinned part is less than a thickness of another part of the current-carrying busbar; and
a piston, wherein the piston is at least partially accommodated in the first channel, and a projection of the piston in the thickness direction of the sealing cover at least partially overlaps with the thinned part.

2. The interrupter according to claim 1, wherein the clamping slot is located on a side that is of the current-carrying busbar and that faces away from the base, and the boss is disposed on the sealing cover and extends into the clamping slot from the side that is of the current-carrying busbar and that faces away from the base.

3. The interrupter according to claim 1 or 2, wherein the boss comprises a first through hole, the first through hole communicates with the first channel, and a projection of the first through hole in the thickness direction of the sealing cover at least partially overlaps with the thinned part.

4. The interrupter according to claim 3, wherein an edge of the first through hole is fitted against an outer wall surface of the piston.

5. The interrupter according to any one of claims 1 to 4, wherein the sealing cover comprises a sealing upper cover and a sealing lower cover, the sealing upper cover, the sealing lower cover, and the base are connected in sequence, an accommodation groove is disposed between the sealing upper cover and the sealing lower cover, and the accommodation groove is configured to enclose the current-carrying busbar.

6. The interrupter according to claim 5, wherein the sealing upper cover is provided with a first raised rib, and the sealing lower cover is provided with a first groove; and/or the sealing lower cover is provided with a first raised rib, and the sealing upper cover is provided with a first groove; and
the first raised rib is inserted into the first groove, and the first raised rib is located on two sides of the current-carrying busbar.

7. The interrupter according to claim 5 or 6, wherein the sealing upper cover is provided with the first through hole, the sealing lower cover is provided with a second through hole, the first through hole and the second through hole communicate to form a part of the first channel, and on one side or two sides of the current-carrying busbar in a width direction of the current-carrying busbar, there is a spacing between the current-carrying busbar and each of the edge of the first through hole and an edge of the second through hole.

8. The interrupter according to claim 7, wherein in an extension direction of the current-carrying busbar, a length of a projection overlapping part between the second through hole and the current-carrying busbar in the thickness direction of the sealing cover is greater than a length of a projection overlapping part between the first through hole and the current-carrying busbar in the thickness direction of the sealing cover.

9. The interrupter according to claim 7 or 8, wherein a bendable groove is disposed on a side that is of the current-carrying busbar and that faces the base, and a projection of the bendable groove completely falls into a projection of the second through hole in the thickness direction of the sealing cover.

10. The interrupter according to any one of claims 1 to 4, wherein the first channel comprises a first subchannel and a second subchannel, the first subchannel is located on the side that is of the current-carrying busbar and that faces away from the base, and the second subchannel is located on a side that is of the current-carrying busbar and that is close to the base; and
in an extension direction of the current-carrying busbar, a length of a projection overlapping part between the second subchannel and the current-carrying busbar in the thickness direction of the sealing cover is greater than a length of a projection overlapping part between the first subchannel and the current-carrying busbar in the thickness direction of the sealing cover.

11. The interrupter according to any one of claims 1 to 4, wherein on one side or two sides of the current-carrying busbar in a width direction of the current-carrying busbar, there is a spacing between a side wall of the first channel and the current-carrying busbar.

12. The interrupter according to any one of claims 1 to 11, wherein the interrupter further comprises a top cover, and the top cover is located on a side that is of the sealing cover and that faces away from the base;
the sealing cover is provided with a second raised rib, and the top cover is provided with a second groove; and/or the sealing cover is provided with a second groove, and the top cover is provided with a second raised rib;
the second raised rib is disposed around a periphery of an opening edge of the first channel; and
the second raised rib is located in the second groove.

13. The interrupter according to claim 12, wherein there is a third raised rib on the sealing cover, and the base is provided with a third groove; and/or the sealing cover is provided with a third groove, and the base is provided with a third raised rib;
the third raised rib is disposed around the periphery of the opening edge of the first channel; and
the third raised rib is located in the third groove.

14. A power distribution device, comprising a connector and the interrupter according to any one of claims 1 to 13, wherein the connector is configured to be electrically connected to a power supply, and the interrupter is electrically connected between the connector and the power supply.

15. A vehicle, comprising a power supply and the power distribution device according to claim 14, wherein the power supply is electrically connected to the power distribution device, and the interrupter is electrically connected between the connector and the power supply.
